# EUROPÄISCHE PATENTSCHRIFT

(11) **EP 3 580 908 B1**
(45) Veröffentlichungstag und Bekanntmachung des Hinweises auf die Patenterteilung: **30.06.2021**
(21) Anmeldenummer: 18707239.2
(22) Anmeldetag: 24.01.2018
(51) Int. Cl.: H04L 29/06, G06F 21/62

(54) **ZUGRIFFSVERWALTUNGSSYSTEM ZUM EXPORT VON DATENSÄTZEN**
ACCESS MANAGEMENT SYSTEM FOR EXPORTING DATA SETS
SYSTÈME DE GESTION D'ACCÈS DESTINÉ À L'EXPORTATION D'ENSEMBLES DE DONNÉES

(30) Priorität: 10.02.2017 DE 102017202183
(43) Veröffentlichungstag der Anmeldung: 18.12.2019
(73) Patentinhaber: Bundesdruckerei GmbH, 10969 Berlin (DE)
(72) Erfinder: KOMAROV, Ilya, 13507 Berlin (DE)
(74) Vertreter: Richardt Patentanwälte PartG mbB
(86) Internationale Anmeldenummer: PCT/EP2018/051744
(87) Internationale Veröffentlichungsnummer: WO 2018/145903

(56) Entgegenhaltungen:
- US-A1- 2004 054 893
- US-A1- 2007 027 929
- US-A1- 2010 198 721
- US-B1- 7 100 206

## Beschreibung

### Technisches Gebiet

Die vorliegenden Darstellungen betreffen IT-Systeme und insbesondere den Export und Import von Datensätzen von bzw. in ein DBMS sowie die Datenbankmigration von einem Quell- auf ein Zielsystem.

### Stand der Technik

Aus dem Stand der Technik sind verschiedene Ansätze zum Export von Datensätzen aus einem DBMS bzw. zum Import der exportierten Datensätze in ein Ziel-DBMS, z.B. im Zuge einer Datenbankmigration, bekannt.

Beispielsweise bieten mehrere klassische, SQL basierte Datenbanken Befehle an, um den Inhalt von ausgewählten Tabellen oder den gesamten Inhalt einer Datenbank in ein oder mehrere Dateien zu exportieren. Diese Dateien werden oft als "Dump Dateien" und die zugehörigen Befehle als "Datenbank-Dumps" bezeichnet. Manche DBMSs, Verwaltungsprogramme zum Management von DBMSs wie zum Beispiel PHP Admin oder sonstige Zugriffsverwaltungssysteme bieten die Möglichkeit, die exportierten Daten zu komprimieren um deren Speicherung und Übertragung an eine Zieldatenbank zu beschleunigen.

Ein damit verbundenes Problem ist die Datensicherheit während und nach dem Export: zwar werden die Datenbankserver oft in einer besonders geschützten IT-Umgebung betrieben. Werden die Daten jedoch exportiert, etwa um sie auf USB-Stick oder per Netzwerk an ein Ziel-DBMS zu übertragen, verlassen die Daten diesen geschützten Raum.

Das technisch geschulte Personal, das die Datenmigration vornimmt, also ein oder mehrere Administratoren, hat vollen Zugriff auf sämtliche Datensätze aller Nutzer, und zwar während die Daten in der Datenbank sind und auch nachdem sie exportiert werden. Insbesondere nach dem Export besteht die Gefahr, dass Administratoren sensible Daten an unberechtigte Dritte weitergeben: während einige besonders sichere DBMS-Varianten auch die Lesezugriffe der Nutzer einschließlich der Administratoren protokollieren und so bei einem massiven Datenleck einen Hinweis auf den Administrator geben können, der als "Datenleck" fungiert hat, entfällt der durch die Lesezugriffsprotokollierung bewirkte Schutz nach dem Export der Daten aus dem DBMS. Gelegentliche Exporte sind jedoch oft nicht zu vermeiden, zum Beispiel wenn der Datenbankserver durch einen neuen Server ersetzt werden muss oder wenn regelmäßig Backups einer Datenbank erstellt werden sollen.

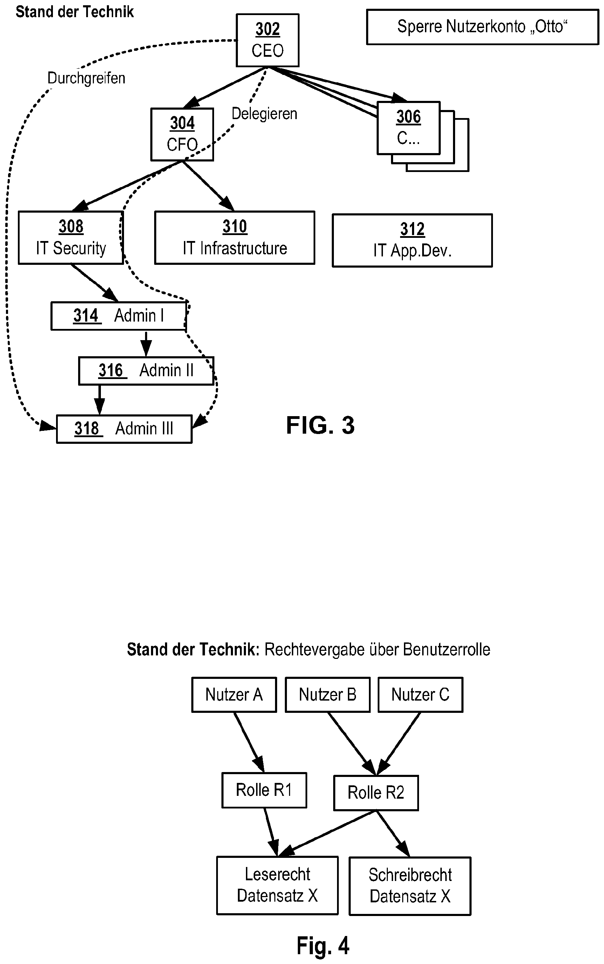

Die Administratoren haben also Zugriff auf sensible Daten, obwohl sie in der Regel nicht an der Spitze der Unternehmensorganisation stehen. So zeigt beispielsweise Figur 3 eine typische Organisationsstruktur eines Unternehmens und die organisatorische Einbettung der Tätigkeit der Administratoren in die Unternehmenshierarchie. Typischerweise sind in einem Unternehmen ein oder mehrerer Geschäftsführer 302 sowie mehrere Abteilungsleiter 304, 306 tätig. Diesen untergeordnet sind Leiter 308, 310, 312 einzelner technischer Teams, die für die Sicherheit und Verfügbarkeit der IT-Struktur oder für die Entwicklung unternehmensrelevanter Applikationen verantwortlich sind. Zur IT Sicherheit können ein oder mehrere Administratoren 314, 316, 318 gehören.

Soll nun eine Datenbankmigration von einem alten Datenbankserver auf einen neuen Datenbankserver erfolgen, so erfolgt dies gemäß im Stand der Technik bekannten Verfahren dadurch, dass ein Administrator, der ohnehin schon Zugriff auf die Daten sämtliches Mitarbeiter einschließlich der Geschäftsführer hat, einen "Datenbankdump" erstellt, also ausgewählte Teile einer Datenbank oder eine komplette Datenbank in Form einer Datei speichert, z.B. auf einen USB Stick. Der neue Datenbankserver wird eingerichtet, also ein Ziel-DBMS installiert, und die exportierten Daten werden im Ziel-DBMS importiert. Während des gesamten Vorgangs haben die Administratoren vollen Zugriff auf die Datensätze innerhalb und außerhalb der jeweiligen Datenbanken, einschließlich sensibler Daten, deren Kenntnis eigentlich der Geschäftsführung vorbehalten sein sollte.

In einem weiteren Aspekt werden im Stand der Technik oft rollenbasierte Zugriffsberechtigungssysteme verwendet wie in Figur 4 dargestellt. Diese haben jedoch den Nachteil, dass nicht mehr nachvollzogen werden kann, welcher Nutzer für eine bestimmte Datenveränderung verantwortlich war, da verschiedene Nutzer unter derselben Rolle handeln können. Insbesondere für die Verwaltung sicherheitskritischer, sensibler Daten ist daher der Einsatz rollenbasierter Systeme zum Export und Import von Daten und/oder zur Verwaltung von Zugriffsrechten problematisch.

Ferner sind es die technischen Administratoren, welche die Zugriffsrechte für all diese Daten gewähren und kontrollieren. Dies führt dazu, dass die Verfügungshoheit über die Daten des Unternehmens in den Händen dieser Administratoren liegt, während diejenigen Personen, wie etwa der Geschäftsführer, leitende Angestellte und andere Mitarbeiter des Unternehmens, welche wirtschaftliche Entscheidung treffen und dafür die Verantwortung tragen, sich vollständig auf die technischen Administratoren verlassen müssen und allenfalls über beschränkte Kontrollmöglichkeiten verfügen. Diese Problematik gewinnt umso mehr an Gewicht, je wichtiger Daten und deren Management für den wirtschaftlichen Erfolg von Unternehmen heutzutage werden.

Die US Patentanmeldung US 20100198721 A1 bezieht sich auf die Verwaltung und gemeinsame Nutzung eines sicheren Datenspeichers, der einem ersten Nutzer zugeordnet ist, und auf ein Verfahren zu dessen Verwaltung. Einem zweiten Nutzer wird zu einem vorbestimmten Teilbereich dieses Datenspeichers ein Zugriffsrecht zugewiesen sodass dieser vorbestimmte Bereich einen sicheren Bereich zum Datenaustausch zwischen dem ersten und dem zweiten Nutzer darstellt. Der Speicherbereich wird über einen sicheren Link zugänglich gemacht im Zuge mindestens einer Transaktion zwischen dem ersten und dem zweiten Nutzer.

### Technisches Problem und grundlegende Lösungen

Mit den bekannten IT-Systemen und diesbezüglich entwickelten Verfahren zum Export und/oder Import von Datensätzen aus bzw. in DBMSs besteht das Problem der mangelnden Datensicherheit, insbesondere im Hinblick auf die Weitergabe sensibler Information durch das administrative Personal.

Vor diesem Hintergrund besteht ein Bedarf an verbesserten Verfahren zum Export und/oder Import von Datensätzen aus bzw. in Datenbanken und an entsprechend verbesserten Zugriffsverwaltungssystems insofern, dass die vorangehend erwähnten Nachteile damit zumindest teilweise vermeidbar sind.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Verfahren zum Export von Datensätzen aus einer Quelldatenbank. Das Verfahren umfasst:
- Empfangen eines Exportbefehls durch ein Quell-Zugriffsverwaltungssystem zum Export von Datensätzen der Quelldatenbank, wobei bei dem Quell-Zugriffsverwaltungssystem mehrere erste Nutzer registriert sind, wobei der Exportbefehl von einem der ersten Nutzer empfangen wird, wobei das Quell-Zugriffsverwaltungssystem so konfiguriert ist, dass es
   ∘ einem oder mehreren der ersten Nutzer Zugriffsrechte auf den Inhalt der Datensätzen in Form von ein oder mehreren Zugriffsberechtigungsnachweisen zuweist, wobei die in der Quelldatenbank gespeicherten Datensätze jeweils zumindest einen Zugriffsberechtigungsnachweis beinhalten,
   ∘ selektiv nur denjenigen der ersten Nutzer Zugriff auf den Inhalt eines der Datensätze ermöglicht, welchen ein Zugriffsberechtigungsnachweis zugeordnet ist, der in diesem Datensatz enthalten ist;
   ∘ zumindest einem der ersten Nutzer ein Eigner-Recht bezüglich der Quelldatenbank zuweist, wobei das Eigner-Recht einem ersten Nutzer erlaubt, die Quelldatenbank ganz oder teilweise zu exportieren, dem einen ersten Nutzer jedoch kein Zugriffsrecht auf den Inhalt der Datensätze der Quelldatenbank einräumt;
- als Antwort auf den Empfang des Exportbefehls, Prüfen, durch das Quell-Zugriffsverwaltungssystem, ob dem ersten Nutzer, von welchem der Exportbefehl empfangen wurde, ein Eigner-Recht bezüglich der Quelldatenbank zugewiesen ist;
- nur dann, wenn die Prüfung ergibt, dass dem Nutzer von dem der Exportbefehl empfangen wurde, das Eigner-Recht bezüglich der Quelldatenbank zugewiesen ist, Exportieren der Datensätze der Quelldatenbank in verschlüsselter Form (960) durch das Quell-Zugriffsverwaltungssystem, wobei diesem Nutzer zumindest für einige der exportierten Datensätze der Quelldatenbank keine Zugriffsrechte zugewiesen sind.

Dies kann vorteilhaft sein, da ein Administrator, der sich als ein bestimmter erster Nutzer bei dem Quell-Zugriffsverwaltungssystem registriert hat, zwar in der Lage ist, Datensätze aus der Quelldatenbank zu exportieren sofern ihm bestimmte Rechte, die hier als "Eigner-Rechte" bezeichnet werden, bezüglich der Quelldatenbank zugewiesen sind. Dies bedeutet jedoch nicht, dass der Administrator auch Zugriff auf den Inhalt dieser Datensätze hat, da hierfür ein anderer Typ von Rechten, sogenannte Zugriffsrechte, ebenfalls an den Administrator zugewiesen sein müssen. Die Verwendung von zwei unterschiedlichen Typen von Berechtigungen für den Datensatzexport und den Zugriff auf den Inhalt eines Datensatzes bewirkt, dass der Administrator zwar seinen administrativen Aufgaben nachkomme und eine Datenbank vollständig oder teilweise exportieren ("dumpen") kann, jedoch nicht auf den Inhalt dieser Datensätze zugreifen kann (bzw. nur auf den Inhalt derjenigen Datensätze, für die er auch die nötigen Zugriffsrechte besitzt). Der Administrator kann dabei weder als "erster Nutzer" auf die Datensätze zugreifen, für die er keine Zugriffsrechte hat, solange diese in der Quelldatenbank gespeichert sind, da das Quell-Zugriffsverwaltungssystem den Zugriff aufgrund fehlender Zugriffsrechte blockiert. Auch nach dem Export kann der Administrator nicht auf die exportierten Datensätze zugreifen, da sie verschlüsselt sind. Somit kann das technische Personal z.B. im Zuge einer Datenbankmigration Datensätze exportieren und importieren, ohne dass hier in irgend einem Schritt des Migrationsverfahrens die Gefahr besteht, dass der Administrator Zugriff auf sensible Daten hat, die z.B. der Geschäftsführung vorbehalten sein sollen.

Nach Ausführungsformen hält das Quell-Zugriffsverwaltungssystem für jeden der ersten Nutzer einen öffentlichen kryptographischen Schlüssel gespeichert vor, der dem jeweiligen ersten Nutzer in Form eines Nutzer-Zertifikats zugeordnet ist. Das Nutzer-Zertifikat stammt von einer Zertifizierungsstelle, z.B. einer Behörde oder einem vertrauenswürdigen privaten Dienstleister oder sonstigen vertrauenswürdigen Organisation oder Organisationseinheit. Das Exportieren der Datensätze der Quelldatenbank in verschlüsselter Form umfasst:
- als Antwort auf den Empfang des Exportbefehls, Identifizieren, durch das Quell-Zugriffsverwaltungssystem, des Nutzer-Zertifikats des Nutzers, von welchem der Exportbefehl empfangen wurde;
- Verschlüsselung der zu exportierenden Datensätze mit dem öffentlichen kryptographischen Schlüssel des identifizierten Nutzer-Zertifikats.

Dies kann die Sicherheit weiter erhöhen, da nicht ein einziger, generischer kryptographischer Schlüssel für alle Exportvorgänge aus der Quelldatenbank verwendet wird, sondern ein nutzerspezifisch ausgestellter Schlüssel. Sollte der zugehörige private Schlüssel auf der Empfängerseite (Ziel-Zugriffsverwaltungssystem) also wegen eines Datenlecks bekannt werden, sind nicht sämtliche Datenbank-Dumps der Quelldatenbank von diesem Datenleck betroffen, sondern nur diejenigen Dumpdateien, die von dem Nutzer stammen, der den Datenbank-Dump erstellt hat.

Nach Ausführungsformen hält ein Ziel-Zugriffsverwaltungssystem, in welches die exportierten Datensätze später importiert werden (sollen), einen privaten Schlüssel geschützt gespeichert vor. Der private Schlüssel bildet zusammen mit dem öffentlichen Schlüssel des ersten Nutzers, von dem der Exportbefehl stammt, ein asymmetrisches kryptographisches Schlüsselpaar. Die geschützte Speicherung des privaten Schlüssels beinhaltet, dass der private Schlüssel ausschließlich über eine von dem Ziel-Zugriffsverwaltungssystem bereitgestellte Schnittstelle zur Entschlüsselung der von der Quelldatenbank exportierten Datensätze verwendet werden kann.

Dies kann vorteilhaft sein, da dadurch sichergestellt wird, dass selektiv nur diejenigen zweiten Nutzer Zugriff auf den Inhalt der importierten Datensätze haben, welchen ein Zugriffsberechtigungsnachweis zugeordnet ist, der in diesem Datensatz enthalten ist. Es ist auch sichergestellt, dass der private Schlüssel dem Administrator nur innerhalb des Ziel-Zugriffsverwaltungssystem zur Verfügung steht, nachdem sich der Administrator dort z.B. als ein zweiter (Datenbank)nutzer autentifiziert ("eingeloggt") hat. Das Ziel-Zugriffsverwaltungssystem stellt sicher, dass der Administrator nach dem Import und der Entschlüsselung nur auf diejenigen Datensätze zugreifen kann, für die er zusätzlich Zugriffsrechte verfügt. Es ist also ausgeschlossen, dass der Administrator seinen privaten Schlüssel verwendet um den exportierten Datenbankdump außerhalb eines Zugriffsverwaltungssystem Kontexts zu entschlüsseln wo keine zusätzlichen Zugriffsbeschränkungen bestehen.

Nach Ausführungsformen beinhaltet das Quell-Zugriffsverwaltungssystem eine erste ID-Datenbank, in welchem jeder der ersten Nutzer mit zumindest einem Nutzer-Zertifikat, ein oder mehreren Zugriffsberechtigungsnachweisen und optional ein oder mehreren Eigner-Zertifikaten, die Eigner-Rechte bezüglich einer vom Quell-Zugriffsverwaltungssystem verwalteten Quelldatenbank beinhalten, verknüpft gespeichert sind. Eine verknüpfte Speicherung eines Nutzer-Zertifikats und eines Zugriffsberechtigungsnachweises in der ersten ID-Datenbank erlaubt dem ersten Nutzer, dem das Nutzer-Zertifikat zugeordnet ist, den Zugriff auf Datensätze der Quelldatenbank, welche eine Kopie dieses Zugriffsberechtigungsnachweises beinhalten.

In einem weiteren Aspekt betrifft die Erfindung ein Verfahren zur Migration von Daten aus der Quelldatenbank in eine Zieldatenbank. Das Verfahren umfasst:
- Durchführen des Exports von Daten nach einem der Verfahren zum Datenexport gemäß einem der hier beschriebenen Ausführungsformen;
- Empfangen eines Importbefehls durch ein Ziel-Zugriffsverwaltungssystem zum Import der aus der Quelldatenbank exportierten Datensätze, wobei bei dem Ziel-Zugriffsverwaltungssystem mehrere zweite Nutzer registriert sind, wobei das Ziel-Zugriffsverwaltungssystem so konfiguriert ist, dass es
   ∘ einem oder mehreren der zweiten Nutzer Zugriffsrechte auf den Inhalt von Datensätzen in Form von ein oder mehreren Zugriffsberechtigungsnachweisen zuweist,
   ∘ selektiv nur denjenigen der zweiten Nutzer Zugriff auf den Inhalt eines der durch das Ziel-Zugriffsverwaltungssystem verwalteten Datensätze ermöglicht, welchen ein Zugriffsberechtigungsnachweis zugeordnet ist, der in diesem Datensatz enthalten ist;
   ∘ zumindest einem der zweiten Nutzer ein Eigner-Recht bezüglich der Zieldatenbank zuweist, wobei das Eigner-Recht einem Nutzer erlaubt, neue Datensätze in der Zieldatenbank durch Import der aus der Quelldatenbank exportierten Datensätze zu erstellen, dem einen Nutzer jedoch kein Zugriffs-recht auf den Inhalt der Datensätze der Zieldatenbank einräumt;
- als Antwort auf den Empfang des Importbefehls, Prüfen, durch das Ziel-Zugriffsverwaltungssystem, ob dem Nutzer, von welchem der Importbefehl empfangen wurde, ein Eigner-Recht bezüglich der Zieldatenbank zugewiesen ist;
- nur dann, wenn die Prüfung ergibt, dass dem Nutzer, von dem der Importbefehl empfangen wurde, das Eigner-Recht bezüglich der Zieldatenbank zugewiesen ist, Importieren und entschlüsseln der verschlüsselten, von der Quelldatenbank exportierten Datensätze durch das Ziel-Zugriffsverwaltungssystem, wobei diesem Nutzer zumindest für einige der zu importierenden Datensätze keine Zugriffsrechte zugewiesen sind.

Dies kann vorteilhaft sein, da während des gesamten Migrationsverfahrens ein Administrator, der z.B. als erster Nutzer den Exportbefehl an das Quell-Zugriffsverwaltungssystem sendet und als zweiter Nutzer den Importbefehl an das Ziel-Zugriffsverwaltungssystem sendet, nicht auf Datensätze zugreifen kann, für die er keine Zugriffsrechte besitzt.

Nach Ausführungsformen hält das Ziel-Zugriffsverwaltungssystem für jeden der zweiten Nutzer einen privaten Schlüssel geschützt gespeichert vor. Der private Schlüssel bildet mit einem öffentlichen Schlüssel, der dem jeweiligen zweiten Nutzer in Form eines Nutzer-Zertifikats zugeordnet ist, ein asymmetrisches kryptographisches Schlüsselpaar, wobei das Nutzer-Zertifikat von der Zertifizierungsstelle stammt. Das Entschlüsseln der importierten Datensätze umfasst:
- als Antwort auf den Empfang des Importbefehls, Identifizieren, durch das Ziel-Zugriffsverwaltungssystem, des privaten kryptographischen Schlüssels, das dem Nutzer, von welchem der Importbefehl empfangen wurde, zugewiesen ist;
- Entschlüsselung der zu importierenden Datensätze mit dem identifizierten privaten Schlüssel.

Nach Ausführungsformen beinhaltet das Ziel-Zugriffsverwaltungssystem eine zweite ID-Datenbank, in welcher jeder der zweiten Nutzer mit zumindest einem Nutzer-Zertifikat, ein oder mehreren Zugriffsberechtigungsnachweisen und optional ein oder mehreren Eigner-Zertifikaten, die Eigner-Rechte bezüglich einer vom Ziel-Zugriffsverwaltungssystem verwalteten Zieldatenbank beinhalten, verknüpft gespeichert ist. Eine verknüpfte Speicherung eines Nutzer-Zertifikats und eines Zugriffsberechtigungsnachweises in der zweiten ID-Datenbank erlaubt dem zweiten Nutzer, dem das Nutzer-Zertifikat zugeordnet ist, den Zugriff auf Datensätze der Zieldatenbank, welche eine Kopie dieses Zugriffsberechtigungsnachweises beinhalten. Zumindest einem der ersten Nutzer und einem der zweiten Nutzer ist das gleiche, von der Zertifizierungsstelle ausgestellte Nutzer-Zertifikat zugewiesen. Beispielsweise kann die Zertifizierungsstelle ein bestimmtes Zertifikat mit einem personalisierten öffentlichen kryptographischen Schlüssel und einem zugehörigen privaten Schlüssel an eine bestimmte Person ausstellen, die als Administrator bei einer Firma arbeitet. Der Administrator verwaltet die Quelldatenbank, ohne alle darin enthaltenen Datensätze lesen zu können, und richtet ein Ziel-Zugriffsverwaltungssystem mit einer noch leeren Zieldatenbank ein. Der private Schlüssel des Administrators wird zumindest von der ID-Datenbank des Ziel-Zugriffsverwaltungssystem verwaltet und geschützt gespeichert und der Administrator kann den privaten Schlüssel nur im Kontext des Ziel-Zugriffsverwaltungssystem einsetzen. Der Administrator ist als einer der ersten Nutzer bei dem Quell-Zugriffsverwaltungssystem registriert und als einer der zweiten Nutzer bei dem Ziel-Zugriffsverwaltungssystem. Da beim Export automatisch eine Verschlüsselung mit dem öffentlichen Schlüssel dieses Administrators erfolgt und beim Import der Datensätze automatisch eine Entschlüsselung der Datensätze mit dem privaten Schlüssel des Administrators, ist sichergestellt, dass der komplette Datenbankmigrationsprozess von einem bestimmten Administrator durchgeführt werden kann, ohne dass dieser sensible Daten nach außen geben kann.

Nach Ausführungsformen umfasst das Verfahren ein Empfangen einer ersten Zugriffsanfrage durch das Quell-Zugriffsverwaltungssystem von dem ersten Nutzer (der den Exportbefehl gesendet hat z.B. weil er als Administrator eine Datenbankmigration durchführt). Die Zugriffsanfrage bezieht sich auf einen Datensatz, der von einem anderen ersten Nutzer in der Quelldatenbank erstellt wurde (z.B. ein Mitarbeiter einer Firma, bei welcher der Administrator angestellt ist). Dieser Datensatz beinhaltet zumindest einen Zugriffsberechtigungsnachweis des anderen ersten Nutzers (also z.B. einen Zugriffberechtigungsnachweis, der dem anderen ersten Nutzer als dem Erzeuger dieses Datensatzes persönlich zugewiesen ist). Das Verfahren umfasst:
- Prüfen, durch das Quell-Zugriffsverwaltungssystem, ob dem einen ersten Nutzer, von dem die erste Zugriffs-Anfrage stammt, in einer ersten ID-Datenbank, die von dem Quell-Zugriffsverwaltungssystem verwaltet wird, eine Kopie dieser Zugriffsberechtigungsnachweises mit dem Nutzer-Zertifikat des ersten Nutzers, von dem die Zugriffsanfrage stammt, verknüpft gespeichert ist; Dies kann z.B. in Form von Berechtigungskettenobjekten geschehen;
- Gewährung des Zugriffs auf den Datensatz des anderen ersten Nutzers an den ersten Nutzer, von dem die Zugriffsanfrage stammt, nur dann, wenn das Quell-Zugriffsverwaltungssystem feststellt, dass die Kopie mit dem Nutzer-Zertifikat verknüpft gespeichert ist, wobei der Zugriff nur im Rahmen der in dem Zugriffsberechtigungsnachweis spezifizierten Art des Zugriffs gewährt wird.

Dies kann vorteilhaft sein, da der Ersteller eines Datensatzes festlegen kann, welche Zugriffsrechte bezüglich dieses Datensatzes möglich sein sollen. So kann der Ersteller beispielsweise mehrere Zugriffsberechtigungsnachweise für das Lesen und Modifizieren eines Datensatzes als Bestandteil des Datensatzes speichern. Da diese Zugriffsberechtigungsnachweise Bestandteil des Datensatzes sind, werden sie mit diesem exportiert. Losgelöst davon werden diese Zugriffsberechtigungszertifikate in einer anderen Datenbank ("erste ID-Datenbank") des Quell-Zugriffsverwaltungssystems ein oder mehreren ersten Nutzern zugewiesen, so dass diese im Rahmen dieser Zuweisung und der in den Berechtigungsnachweisen spezifizierten Zugriffsrechte auf die eigenen Datensätze und ggf. auch die Datensätze anderer Nutzer zugreifen können. Beispielsweise muss jeder erste Nutzer, um auf einen Datensatz eines anderen Nutzers zugreifen zu können, nachweisen, dass ihm ein entsprechender Zugriffsberechtigungsnachweis in der ID-Datenbank zugewiesen ist.

Somit kann eine feingranulare Hierarchie aus Zugriffsrechten jeweils für unterschiedliche Zugriffstypen definiert werden, die sich in der Quelldatenbank und in der Zieldatenbank unterscheiden können. So kann beispielsweise gemäß der in der ID-Datenbank des Quell-Zugriffsverwaltungssystems gespeicherten Zuweisung von Nutzer-Zertifikaten und Zugriffsberechtigungsnachweisen ein bestimmter Nutzer das Recht haben, auf die Datensätze eines bestimmten anderen Nutzers in der Quelldatenbank zuzugreifen. Sogar wenn alle Personen, die beim Quell-Zugriffsverwaltungssystem als erste Nutzer registriert sind auch beim Ziel-Zugriffsverwaltungssystem als zweite Nutzer registriert sind, können die Zugriffs-rechte im Ziel-Zugriffsverwaltungssystem dennoch von denen im Quell-Zugriffsverwaltungssystem abweichen, wenn die Nutzer-Zertifikate in der ID-Datenbank des Ziel-Zugriffsverwaltungssystem mit anderen Zugriffsberechtigungsnachweisen verknüpft gespeichert sind als in der ID-Datenbank des Quell-Zugriffsverwaltungssystem.

Nach Ausführungsformen ist das Ziel-Zugriffsverwaltungssystem konfiguriert zu:
- Nach dem Import der exportierten Datensätze in die Zieldatenbank, Empfangen einer zweiten Zugriffsanfrage durch das Ziel-Zugriffsverwaltungssystem von einem der zweiten Nutzer, wobei die zweite Zugriffsanfrage sich auf einen der importierten Datensätze bezieht, der von einem ersten Nutzer in der Quelldatenbank erstellt wurde, der eine Person repräsentiert, die als ein anderer zweiten Nutzer beim Ziel-Zugriffsverwaltungssystem registriert ist, wobei dieser Datensatz zumindest einen Zugriffsberechtigungsnachweis des anderen zweiten Nutzers beinhaltet;
- Prüfen, durch das Ziel-Zugriffsverwaltungssystem, ob dem einen zweiten Nutzer, von dem die zweite Zugriffs-Anfrage stammt, in einer zweiten ID-Datenbank, die von dem Ziel-Zugriffsverwaltungssystem verwaltet wird, eine Kopie dieses Zugriffsberechtigungsnachweises mit dem Nutzer-Zertifikat des zweiten Nutzers, von dem die zweite Zugriffsanfrage stammt, verknüpft gespeichert ist;
- Gewährung des Zugriffs auf den Datensatz des anderen zweiten Nutzers an den zweiten Nutzer, von dem die zweite Zugriffsanfrage stammt, nur dann, wenn das Ziel-Zugriffsverwaltungssystem feststellt, dass die Kopie mit dem Nutzer-Zertifikat verknüpft gespeichert ist, wobei der Zugriff nur im Rahmen der in dem Zugriffsberechtigungsnachweis spezifizierten Art des Zugriffs gewährt wird.

Somit kann eine feingranulare Hierarchie aus Zugriffsrechten auch für die Datensätze der Zieldatenbank definiert werden. Die Kette bzw. Hierarchie der Zugriffsrechte im Ziel-Zugriffsverwaltungssystem kann von denen im Quell-Zugriffsverwaltungssystem abweichen.

Nach Ausführungsformen kann das Quell-Zugriffsverwaltungssystem und das Ziel-Zugriffsverwaltungssystem über die gleichen funktionalen Komponenten verfügen, sodass das Quell-Zugriffsverwaltungssystem in funktionaler Hinsicht auch als Ziel-Zugriffsverwaltungssystem agieren kann, welches Datensätze importiert, die aus der Ziel-Datenbank exportiert werden. In diesem Fall beinhaltet z.B. auch die ID-Datenbank des Quell-ZUGRIFFSVERWALTUNGSSYSTEM einen privaten Schlüssel des zweiten Nutzers der Datensätze aus der Zieldatenbank exportiert und verschlüsselt.

Nach Ausführungsformen umfassen die Zugriffsberechtigungsnachweise, die als Bestandteil der Datensätze der Quelldatenbank und/oder der Zieldatenbank gespeichert sind, ein oder mehrere der folgenden Zugriffsberechtigungsnachweise:
- ein Lesezugriffs-Berechtigungsnachweis, welcher einem Nutzer einen lesenden Zugriff auf den Inhalt eines Datensatzes ermöglicht;
- ein Schreibzugriffs- Berechtigungsnachweis, welcher einem Nutzer einen modifizierenden Zugriff auf den Inhalt eines Datensatzes ermöglicht;
- ein Indexzugriffs- Berechtigungsnachweis, welcher einem Nutzer Kenntnis der Existenz des Datensatzes in der den Datensatz beinhaltenden Datenbank und einen lesenden Zugriff auf Metadaten des Datensatzes ermöglicht.

Beispielsweise ermöglicht ein Indexzugriffs-Zertifikat bzw. eine Verknüpfung mit diesem einem Nutzer, eine statistische Auswertung mehrerer Datensätze zu erhalten, etwa bezüglich der Frage, auf wie viele Datensätze einer Quelldatenbank ein bestimmter Nutzer Lesezugriff oder Schreibzugriff besitzt oder wie viele Datensätze in einem Nutzdatenfeld die Wörter "Max Mustermann" beinhalten.

Die Verwendung mehrerer unterschiedlicher Typen von Zugriffs-Zertifikaten für unterschiedliche Zugriffsarten und die individuelle Verknüpfung dieser Zertifikatstypen mit einzelnen Nutzern, um diesen den Zugriff auf die erstellten Daten zu ermöglichen, kann vorteilhaft sein, da dadurch eine besonders feingranulare Kontrolle des Zugriffs auf die Daten ermöglicht wird.

Nach Ausführungsformen sind die Zugriffsberechtigungsnachweise als Zugriffs-Zertifikate ausgebildet. Diese können mit den Nutzer-Zertifikaten von ein oder mehreren Nutzern verknüpft in einer ID-Datenbank gespeichert werden, z.B. als Bestandteil eines Zugriffsermächtigungskettenobjekts.

Nach Ausführungsformen beinhalten die Zugriffsberechtigungsnachweise jeweils einen Delegierbarkeitsparameter. Das Verfahren umfasst:
- Empfang einer Übertragungs-Anfrage eines der ersten Nutzer zur Übertragung eines Zugriffsrechts bezüglich eines in der Quelldatenbank gespeicherten Datensatzes durch das Quell-Zugriffsverwaltungssystem, wobei der die Übertragungs-anfrage generierende erste Nutzer nicht der Ersteller dieses Datensatzes ist;
- Ausgabe der Übertragungsanfrage über eine Schnittstelle des Quell-Zugriffsverwaltungssystem an einen der ersten Nutzer, an den die Übertragungs-anfrage gerichtet ist, wobei diesem erste Nutzer ein Zugriffsberechtigungszertifikat zum Zugriff auf diesen Datensatz zugewiesen ist; beispielsweise kann dem ersten Nutzer das Zugriffsberechtigungszertifikat zugewiesen sein, weil dieser Nutzer der Ersteller des Datensatzes ist oder weil diesem Nutzer vom Ersteller das Zugriffsrecht übertragen wurde; Die Übertragung dieses Rechts kann durch verknüpfte Speicherung des Zugriffsberechtigungszertifikats mit einem Nutzer-Zertifikat des Nutzers, der das entsprechende Zugriffsrecht erhalten soll, in einer ID-Datenbank des Quell-Zugriffsverwaltungssystem erfolgen.
- Prüfung, durch das Quell-Zugriffsverwaltungssystem, ob der Delegierbarkeitsparameter des Zugriffsberechtigungsnachweises den Wert "DELEGIERBAR" oder den Wert "NICHT DELEGIERBAR" einnimmt;
- Falls der Delegierbarkeitsparameter den Wert "NICHT DELEGIERBAR" beinhaltet, Verhinderung einer verknüpften Speicherung des Zugriffszertifikats mit dem Nutzer-Zertifikat des anfragenden ersten Nutzers;
- Falls der Delegierbarkeitsparameter den Wert "DELEGIERBAR" beinhaltet, Konfiguration der Schnittstelle in einer Weise, die es dem Empfänger der Übertragungsanfrage ermöglicht, dem anfragenden ersten Nutzer eine Kopie des Zugriffsberechtigungsnachweises zuzuweisen, die diesem Nutzer den Zugriff auf den Datensatz gestattet, wobei der Wert des Delegierbarkeitsparameters in der Kopie des Zugriffsberechtigungsnachweises in Abhängigkeit von der Eingabe des Nutzers, an den die Übertragungsanfrage gerichtet ist, den Wert "DELEGIERBAR" oder den Wert "NICHT DELEGIERBAR" einnimmt.

Nach Ausführungsformen umfasst das Verfahren:
- Bereitstellung einer ersten Schnittstelle (142, 144) durch das Quell-Zugriffsverwaltungssystem, die es den ersten Nutzern erlaubt, Zugriffsberechtigungsnachweise, die ihnen zugeordnet sind und zum Zugriff auf ein oder mehrere Datensätze der Quelldatenbank berechtigen, auch anderen ersten Nutzern zuzuweisen, sodass eine erste Hierarchie an Nutzer-zu-Nutzer Zuweisung von Zugriffsberechtigungsbelegen entsteht;
- Als Antwort auf eine Zugriffs-Anfrage des ersten Nutzers bezüglich des Zugriffs auf einen Datensatz der Quelldatenbank, Analyse der ersten Hierarchie durch das Quell-Zugriffsverwaltungssystem um zu prüfen, ob dem anfragenden ersten Nutzer von dem Ersteller dieses Datensatzes direkt oder über ein oder mehrere weitere erste Nutzer ein Zugriffsberechtigungsnachweis zugeordnet wurde, der in Kopie in diesem Datensatz enthalten ist.

Nach Ausführungsformen umfasst das Verfahren:
- Bereitstellung einer zweiten Schnittstelle durch das Ziel-Zugriffsverwaltungssystem, die es den zweiten Nutzern erlaubt, Zugriffsberechtigungsnachweise, die ihnen zugeordnet sind und zum Zugriff auf ein oder mehrere Datensätze der Zieldatenbank berechtigen, auch anderen zweiten Nutzern zuzuweisen, sodass eine zweite Hierarchie an Nutzer-zu-Nutzer Zuweisung von Zugriffsberechtigungsbelegen entsteht;
- Als Antwort auf eine Zugriffs-Anfrage des zweiten Nutzers bezüglich des Zugriffs auf einen Datensatz der Zieldatenbank, Analyse der zweiten Hierarchie durch das Ziel-Zugriffsverwaltungssystem um zu prüfen, ob dem anfragenden zweiten Nutzer von dem Ersteller dieses Datensatzes direkt oder über ein oder mehrere weitere zweite Nutzer ein Zugriffsberechtigungsnachweis zugeordnet wurde, der in Kopie in diesem Datensatz enthalten ist.
Dies kann vorteilhaft sein, da es den beim Ziel-Zugriffsverwaltungssystem registrierten zweiten Nutzern ermöglicht wird, für die eigenen erstellten Datensätze und/oder für Datensätze anderer Nutzer, auf die ein zweiter Nutzer Zugriff hat, weiteren zweiten Nutzern spezifische Zugriffsrechte einzuräumen. Durch Wahl eines Delegierbarkeitsparameterwerts kann der Nutzer zudem festlegen, ob dieses Zugriffsrecht durch den Nutzer, der die Zugriffsrechte empfängt, weitergegeben werden können. Somit wird jeder einzelne Nutzer, der Datensätze in einer Datenbank erstellt, zum eigenständigen Verwalter der Zugriffsrechte anderer bezüglich dieser Datensätze.

Dies entlastet die Administratoren und ermöglicht ein feingranulares, auf persönlichem Vertrauen von Personen beruhendem, Zugriffsverwaltungsverfahren. Der Zugriff kann einzelnen Nutzern leicht dadurch entzogen werden, dass eine z.B. in einer ID-Datenbank gespeicherte Verknüpfung von Nutzer-Zertifikat mit einem entsprechenden Zugriffsberechtigungsnachweis gelöscht wird.

In einem weiteren Aspekt betrifft die Erfindung ein Verfahren zum Import von Datensätzen in eine Zieldatenbank. Das Verfahren umfasst:
- Empfangen eines Importbefehls durch ein Ziel-Zugriffsverwaltungssystem zum Import der Datensätze, wobei bei dem Ziel-Zugriffsverwaltungssystem mehrere zweite Nutzer registriert sind, wobei das Ziel-Zugriffsverwaltungssystem so konfiguriert ist, dass es
   ∘ einem oder mehreren der zweiten Nutzer Zugriffsrechte auf den Inhalt von Datensätzen in Form von ein oder mehreren Zugriffsberechtigungsnachweisen zuweist, wobei die zu importierenden Datensätze jeweils zumindest einen Zugriffsberechtigungsnachweis beinhalten;
   ∘ selektiv nur denjenigen der zweiten Nutzer Zugriff auf den Inhalt eines der durch das Ziel-Zugriffsverwaltungssystem verwalteten Datensätze ermöglicht, welchen ein Zugriffsberechtigungsnachweis zugeordnet ist, der in diesem Datensatz enthalten ist;
   ∘ zumindest einem der zweiten Nutzer ein Eigner-Recht bezüglich der Zieldatenbank zuweist, wobei das Eigner-Recht einem Nutzer erlaubt, neue Datensätze in der Zieldatenbank durch Import der aus der Quelldatenbank exportierten Datensätze zu erstellen, dem einen Nutzer jedoch kein Zugriffs-recht auf den Inhalt der Datensätze der Zieldatenbank einräumt;
- als Antwort auf den Empfang des Importbefehls, Prüfen, durch das Ziel-Zugriffsverwaltungssystem, ob dem Nutzer, von welchem der Importbefehl empfangen wurde, ein Eigner-Recht bezüglich der Zieldatenbank zugewiesen ist;
- nur dann, wenn die Prüfung ergibt, dass dem Nutzer, von dem der Importbefehl empfangen wurde, das Eigner-Recht bezüglich der Zieldatenbank zugewiesen ist, Importieren und entschlüsseln der verschlüsselten, von der Quelldatenbank exportierten Datensätze durch das Ziel-Zugriffsverwaltungssystem, wobei diesem Nutzer zumindest für einige der zu importierenden Datensätze keine Zugriffsrechte zugewiesen sind.

Nach Ausführungsformen ist das Quell-Zugriffsverwaltungssystem ein Quell-DBMS. Das Ziel- Zugriffsverwaltungssystem ist ein Ziel-DBMS. Beim dem Quell-DBMS und/oder Ziel-DBMS kann es sich z.B. um ein MySQL, PostreSQL DBMS oder dergleichen handeln.

In einem weiteren Aspekt betrifft die Erfindung ein Computersystem mit einem Quell-Zugriffsverwaltungssystem, wobei das Quell-Zugriffsverwaltungssystem umfasst:
- Eine Quelldatenbank mit Datensätzen, wobei die Datensätze jeweils zumindest einen Zugriffsberechtigungsnachweis beinhalten;
- Ein Register, in dem mehrere erste Nutzer registriert und gespeichert sind,
- Eine Schnittstelle zum Empfangen eines Exportbefehls zum Export von Datensätzen der Quelldatenbank, wobei der Exportbefehl von einem der ersten Nutzer empfangen wird.

Das Quell-Zugriffsverwaltungssystem ist so konfiguriert ist, dass es:
- einem oder mehreren der ersten Nutzer Zugriffsrechte auf den Inhalt der Datensätzen in Form von ein oder mehreren Zugriffsberechtigungsnachweisen zuweist,
- selektiv nur denjenigen der ersten Nutzer Zugriff auf den Inhalt eines der Datensätze ermöglicht, welchen ein Zugriffsberechtigungsnachweis zugeordnet ist, der in diesem Datensatz enthalten ist;
- zumindest einem der ersten Nutzer ein Eigner-Recht bezüglich der Quelldatenbank zuweist, wobei das Eigner-Recht einem ersten Nutzer erlaubt, die Quelldatenbank ganz oder teilweise zu exportieren, dem einen ersten Nutzer jedoch kein Zugriffsrecht auf den Inhalt der Datensätze der Quelldatenbank einräumt;
- als Antwort auf den Empfang des Exportbefehls prüft, ob dem ersten Nutzer, von welchem der Exportbefehl empfangen wurde, ein Eigner-Recht bezüglich der Quelldatenbank zugewiesen ist;
- nur dann, wenn die Prüfung ergibt, dass dem Nutzer von dem der Exportbefehl empfangen wurde, das Eigner-Recht bezüglich der Quelldatenbank zugewiesen ist, Datensätze der Quelldatenbank in verschlüsselter Form (960) exportiert, wobei diesem Nutzer zumindest für einige der exportierten Datensätze der Quelldatenbank keine Zugriffsrechte zugewiesen sind.

In einem weiteren Aspekt betrifft die Erfindung ein Computersystem mit einem Ziel-Zugriffsverwaltungssystem, wobei das Ziel-Zugriffsverwaltungssystem umfasst:
- eine Zieldatenbank;
- ein Register, in dem mehrere zweite Nutzer registriert und gespeichert sind,
- eine Schnittstelle zum Empfangen eines Importbefehls von einem der zweiten Nutzer zum Import von Datensätzen.

Das Ziel-Zugriffsverwaltungssystem ist so konfiguriert ist, dass es
- einem oder mehreren der zweiten Nutzer Zugriffsrechte auf den Inhalt von Datensätzen in Form von ein oder mehreren Zugriffsberechtigungsnachweisen zuweist,
- selektiv nur denjenigen der zweiten Nutzer Zugriff auf den Inhalt eines der durch das Ziel-Zugriffsverwaltungssystem verwalteten Datensätze ermöglicht, welchen ein Zugriffsberechtigungsnachweis zugeordnet ist, der in diesem Datensatz enthalten ist;
- zumindest einem der zweiten Nutzer ein Eigner-Recht bezüglich der Zieldatenbank zuweist, wobei das Eigner-Recht einem Nutzer erlaubt, neue Datensätze in der Zieldatenbank durch Import der aus der Quelldatenbank exportierten Datensätze zu erstellen, dem einen Nutzer jedoch kein Zugriffsrecht auf den Inhalt der Datensätze der Zieldatenbank einräumt.

Das Ziel-Zugriffsverwaltungssystem ist konfiguriert zum:
- als Antwort auf den Empfang des Importbefehls, Prüfen, durch das Ziel-Zugriffsverwaltungssystem, ob dem zweiten Nutzer, von welchem der Importbefehl empfangen wurde, ein Eigner-Recht bezüglich der Zieldatenbank zugewiesen ist;
- nur dann, wenn die Prüfung ergibt, dass dem zweiten Nutzer, von dem der Importbefehl empfangen wurde, das Eigner-Recht bezüglich der Zieldatenbank zugewiesen ist, Importieren und entschlüsseln der verschlüsselten, von der Quelldatenbank exportierten Datensätze durch das Ziel-Zugriffsverwaltungssystem, wobei die importierten Datensätze jeweils zumindest einen Zugriffsberechtigungsnachweis beinhalten, wobei diesem zweiten Nutzer zumindest für einige der zu importierenden Datensätze keine Zugriffsrechte zugewiesen sind.

In einem weiteren Aspekt betrifft die Erfindung ein verteiltes Computersystem mit einem ersten und einem zweiten Computersystem. Das erste Computersystem beinhaltet ein Quell-Zugriffsverwaltungssystem nach Ausführungsformen der Erfindung. Das zweite Computersystem beinhaltet ein Ziel-Zugriffsverwaltungssystem nach Ausführungsformen der Erfindung. Das erste und zweite Computersystem sind über ein Netzwerk, z.B. das Internet, verbunden. Das Quell-Zugriffsverwaltungssystem und das Ziel-Zugriffsverwaltungssystem sind dazu ausgebildet, die exportierten Daten über das Netzwerk in verschlüsselter Form von dem Quell-Zugriffsverwaltungssystem an das Ziel-Zugriffsverwaltungssystem zu übertragen.

Nach Ausführungsformen können die ersten Nutzer über eine GUI des Quell-Zugriffsverwaltungssystem durch die Zuweisung von Zugriffsberechtigungsnachweisen, die ihnen zugeordnet sind, auf andere erste Nutzer dynamisch eine Berechtigungshierarchie erstellen. Die Berechtigungshierarchie wird sukzessive dadurch erzeugt, dass ein erster Nutzer persönlich einen Zugriffsberechtigungsnachweis einem anderen ersten Nutzer zuweist. Im Ergebnis kann dieser andere erste Nutzer den Zugriffsberechtigungsnachweis zum Zugriff auf ein oder mehrere Datensätze der Quelldatenbank, die eine Kopie dieses Zugriffsberechtigungsnachweises beinhalten, nutzen.

In analoger Weise können nach Ausführungsformen die zweiten Nutzer über eine GUI des Ziel-Zugriffsverwaltungssystem durch die Zuweisung von Zugriffsberechtigungsnachweisen, die ihnen zugeordnet sind, auf andere zweite Nutzer dynamisch eine Berechtigungshierarchie erstellen. Die Berechtigungshierarchie wird sukzessive dadurch erzeugt, dass ein zweiter Nutzer persönlich einen Zugriffsberechtigungsnachweis einem anderen zweiten Nutzer zuweist. Im Ergebnis kann dieser andere zweite Nutzer den Zugriffsberechtigungsnachweis zum Zugriff auf ein oder mehrere Datensätze der Zieldatenbank, die eine Kopie dieses Zugriffsberechtigungsnachweises beinhalten, nutzen.

Dies kann vorteilhaft sein, da dynamisch, in Abhängigkeit von persönlichen Vertrauensverhältnissen, im Quell-Zugriffsverwaltungssystem und im Ziel-Zugriffsverwaltungssystem unterschiedliche Hierarchien von Zuweisungen von Zugriffsberechtigungsnachweisen erstellt werden können. Bei diesen unterschiedlichen Berechtigungshierarchien kann es sich insbesondere um Berechtigungshierarchien handeln, welche unabhängig voneinander erzeugt werden.

Beispielsweise beruht die erste Berechtigungshierarchie darauf, auf welcher "Rechte-Ebene" die einzelnen von ihr umfassten Nutzer in einem Unternehmen oder einer sonstigen Organisationsstruktur angesiedelt sind. Beispielsweise ist der erste Nutzer, von dem ausgehend die erste Berechtigungshierarchie erzeugt wird, auf der höchsten Rechte-Ebene aller von der ersten Berechtigungshierarchie umfassten Nutzer angesiedelt. Er hat somit die meisten "Rechte" inklusive eines ersten Zugriffsrechts inne und kann beispielsweise über die erste Berechtigungshierarchie den anderen Nutzern dieses erste Zugriffsrecht ebenfalls zuweisen.

Eine Berechtigungshierarchie kann beispielsweise eine Sequenz von Nutzer-Zertifikaten der einzelnen von der Berechtigungshierarchie umfassten Nutzer umfassen. Diese Sequenz kann auch einen Zugriffsberechtigungsnachweis beinhalten, das dem ersten Nutzer-Zertifikat dieser Hierarchie zugeordnet ist. Aus der Reihenfolge der Nutzerzertifikate in der Sequenz kann beispielsweise abgelesen werden, wie ein von dem ersten Zugriffs-Zertifikat der Sequenz umfasstes Zugriffsrecht von Nutzer zu Nutzer weitergegeben wurde. Die Sequenz kann beispielsweise in Form eines Zugriffsermächtigungskettenobjektes in einer ID-Datenbank des jeweiligen Zugriffsverwaltungssystem gespeichert werden. Die Authentizität dieser Sequenz kann beispielsweise durch eine Signatur einer dazu berechtigten und vertrauenswürdigen Instanz bestätigt bzw. gewährleitet werden. Diese berechtigte und vertrauenswürdige Instanz prüft beispielsweise bei der Erzeugung der entsprechenden Berechtigungshierarchie ihre Korrektheit und Authentizität bevor sie die Berechtigungshierarchie bestätigt, d.h. signiert.

Eine dynamische Erzeugung der Berechtigungshierarchien kann den Vorteil haben, dass jeder von der Berechtigungshierarchie umfasste Nutzer, welcher über eine Berechtigung zum Erweitern der Hierarchie verfügt und dieses Recht in Anspruch nimmt, d.h. einen Nutzer hinzufügt, dies in Eigenverantwortung tut. Somit ist jede Erweiterung der Berechtigungshierarchie eindeutig einem bestimmten Nutzer und dessen Verantwortung zuzuschreiben. Ferner kann sich aus der dynamische Erzeugung automatisch eine natürliche und/oder sachgerechte hierarchische Struktur ergeben, die sich leicht an Änderungen anpassen kann. Somit können insbesondere vordefinierte, starre und möglicherweise nur unter großem Aufwand anpassbare Strukturierungsvorgaben vermieden werden. Die Berechtigungshierarchie kann vielmehr das Ergebnis eines evolutionären Prozesses sein.

Eine Berechtigungshierarchie kann beispielsweise von dem Erzeuger des Datenobjekts ausgehen, auf welches zugegriffen werden soll. Somit kann der zweite Nutzer unabhängig von seinen sonstigen Rechten vollständige Kontrolle über von ihm erstellte Datensätze ausüben. Er entscheidet selbstständig, wer außer ihm Zugriff auf das Datensatz erhalten kann. Da unterschiedliche Datensätze im Allgemeinen unterschiedliche Erzeuger haben, gibt es i.d.R. niemanden, der einen vollständigen Zugriff auf alle Datensätze besitzt.

Nach Ausführungsformen der Erfindung kann der zumindest eine erste Nutzer, dem ein Eigner-Recht bezüglich der Quelldatenbank zugewiesen ist, über die GUI des Quell-Zugriffsverwaltungssystem dieses Eigner-Recht auch auf ein oder mehrere andere erste Nutzer übertragen. Dadurch wird dynamisch eine Eigner-Berechtigungshierarchie erstellt. Die Eigner-Rechte bezüglich einer bestimmten Datenbank können in Form von Eigner-Zertifikaten ausgebildet sein. Die Eigner-Berechtigungshierarchie wird sukzessive dadurch erzeugt, dass der erster Nutzer persönlich einen Eigner-Rechts-Nachweis, z.B. ein Eigner-Zertifikat das der Quelldatenbank zugewiesen ist, einem anderen ersten Nutzer zuweist. Im Ergebnis kann dieser andere erste Nutzer nun ebenfalls Daten aus der Quelldatenbank exportieren. Die Eigner-Berechtigungshierarchie kann dabei unabhängig von der Zugriffs-Berechtigungshierarchie gebildet und in einer ID-Datenbank des Quell-Zugriffsverwaltungssystem gespeichert werden.

In analoger Weise kann nach Ausführungsformen der Erfindung der zweite Nutzer, der Eigner-Rechte bezüglich der Zieldatenbank besitzt, über die GUI des Ziel-Zugriffsverwaltungssystem Eigner-Rechten bezüglich der Zieldatenbank anderen zweiten Nutzern zuweisen. Dadurch entsteht dynamisch eine Eigner-Berechtigungshierarchie, die zum Beispiel in Form eines Eigner-Zertifikatskettenobjektes in einer ID-Datenbank des Ziel-Zugriffsverwaltungssystem gespeichert sein kann.

Nach Ausführungsformen ist das Quell-Zugriffsverwaltungssystem dazu ausgebildet, einem ersten Nutzer nur dann das Öffnen einer Datenbankverbindung zu der Quelldatenbank, das Erzeugen von Datensätzen in der Quelldatenbank sowie den Export von (selbst oder durch andere erste Nutzer erzeugten) Datensätzen aus der Quelldatenbank zu erlauben, wenn diesem ein Eigner-Recht bezüglich dieser Quelldatenbank zugewiesen ist. Das Eigner-Recht kann die Form eines Eigner-Zertifikats haben.

Nach Ausführungsformen ist das Ziel-Zugriffsverwaltungssystem dazu ausgebildet, einem zweiten Nutzer nur dann das Öffnen einer Datenbankverbindung zu der Ziel-datenbank, das Erzeugen von Datensätzen in der Zieldatenbank sowie den Import von Datensätzen in die Zieldatenbank zu erlauben, wenn diesem ein Eigner-Recht bezüglich dieser Zieldatenbank zugewiesen ist. Das Eigner-Recht kann die Form eines Eigner-Zertifikats haben.

Dies kann vorteilhaft sein, da jeder Nutzer, auch auf der untersten Rechte-Ebene, volle Kontrolle über die von ihm erstellten Daten behält: Auch wenn ein anderer Nutzer, z.B. der Geschäftsführer oder eine dem Geschäftsführer untergeordnete, vertrauenswürdige Person (z.B. Bereichsleiter, Abteilungsleiter, Gruppenleiter, Sicherheitsbeauftragter, etc.) dem Nutzer zunächst einmal durch Ausstellung eines Eigner-Zertifikats erlauben muss, überhaupt auf eine Quell- oder Ziel-Datenbank zugreifen und Daten in dieser anlegen zu können, so bedeutet dies nicht, dass dadurch der Geschäftsführer oder die besagte vertrauenswürdige Person damit automatisch auch Zugriff auf die von diesem Nutzer erstellten Daten hat. Hierdurch kann der Datenschutz auf allen Ebenen enorm erhöht werden, denn bei dem die Daten erzeugenden Nutzer kann es sich sowohl um einfache Mitarbeiter und Angestellte als auch um leitende Angestellte oder Geschäftsführer handeln. Beispielsweise kann das erste Eigner-Zertifikat für eine Quell-oder Ziel-Datenbank von einem Geschäftsführer bzw. für einen Geschäftsführer ausgestellt werden, welcher dann die mit dem Eigner-Zertifikat verbundenen Rechte an Abteilungsleiter und einfache Angestellte weitergewähren kann. Dies bedeutet aber nicht automatisch, dass dieser Geschäftsführer auf die Datensätze, welche die Abteilungsleiter oder die Angestellten dann in dieser Quell- oder Ziel-Datenbank anlegen, zugreifen und diese beispielsweise lesen und/oder ändern kann. Dies ist vielmehr nur möglich, wenn ein Nutzer, der einen bestimmten Datensatz anlegt, ein oder mehrere Zugriffsrechte bezüglich dieses bestimmten Datensatzes explizit an den Geschäftsführer vergibt.

In einem vorteilhaften Aspekt ist also ein hohes Maß an Datenschutz gewährleistet, da eine Prüfung zweier unabhängiger Parameter vor Zugriffsgewährung erfolgt (sowohl bezüglich der Eignerschaft der Datenbank als auch bezüglich der Zugriffsberechtigung auf den konkreten Datensatz). Gerade im Hinblick auf die unabhängige Tätigkeit unternehmensinterner Kontrollgremien kann es wichtig sein, dass ein Vorgesetzter die von diesen Personen bzw. Stellen generierte Daten nicht automatisch lesen kann.

In einem weiteren Aspekt können Ausführungsformen der Erfindung sicherstellen, dass technische Administratoren, die z.B. die Hardware für die Quelldatenbanken und Zieldatenbanken bereitstellen und administrieren, hinsichtlich der Zugriffsrechte auf die in diesen Datenbanken gespeicherten Informationen keine privilegierte Stellung und insbesondere keine privilegierten Zugriffsrechte besitzen. Damit kann das Problem, dass heute das technisch-administrative Personal oftmals unbeschränkten Zugang auf hoch sensible Daten beispielsweise der Geschäftsführung besitzt, vermieden werden.

In einem weiteren vorteilhaften Aspekt ermöglicht die Verwendung der ersten und zweiten Schnittstelle eine unabhängige Kontrolle und Rechtevergabe bezüglich zweier technischer Funktionalitäten, nämlich a) der Funktionalität des Zugriffs auf eine Datenbank und der Datensatzerzeugung in dieser und b) der Funktionalität des Zugriffs auf den Inhalt von Datensätzen innerhalb der Datenbank. Eine in hohem Maße flexible und feingranulare Zuweisung von Rechten wird somit ermöglicht, was angesichts komplexer und sich häufig ändernder Zuständigkeitsverhältnisse gerade in großen Konzernen von hohem Vorteil ist. Durch die dynamische Erzeugung dieser Rechtezuweisungen können starre Zuständigkeitsstrukturen vermieden werden.

Der initiale Eigner einer Datenbank kann frei bestimmen, welchen anderen Nutzern er Eignerschafts-Rechte zuerkennen will, ohne hierbei in technischer Hinsicht an bestimmte Unternehmenshierarchien gebunden zu sein. In analoger Weise steht es jedem Nutzer, der einen Datensatz neu erstellt hat, frei, beliebigen anderen Nutzern Zugriffsrechte auf diese Datensätze über die Zuweisung entsprechender Zugriffs-rechte zu gewähren, ohne hierbei in technischer Hinsicht an bestimmte Unternehmenshierarchien gebunden zu sein und ohne dass übergeordnete Personen und/oder das technisch-administrative Personal automatisch Zugriff auf die erstellten Daten erhalten.

Die Zugriffsberechtigungsnachweise für Datensätze der Quell- und/oder Ziel-Datenbank können als Zugriffs-Zertifikate ausgebildet sein. Die Eigner-Berechtigungsnachweise (auch "Eigner-Rechte" genannt) für die Quell- und/oder Ziel-Datenbank können als Eigner-Zertifikate ausgebildet sein.

Vorzugsweise handelt es sich bei den Zugriffs-Zertifikaten und/oder Eigner-Zertifikaten um reine Zahlenwerte, nicht um komplexe x509 Zertifikate. Metadaten bezüglich der Gültigkeit der Zertifikate und bezüglich anderer Aspekte können getrennt von dem eigentlichen Zugriffs-Zertifikat und/oder Eigner-Zertifikat in der ID-Datenbank des jeweiligen Zugriffsverwaltungssystems gespeichert sein. Vorzugsweise enthält jeder von einem bestimmten Nutzer in der Quelldatenbank oder Ziel-datenbank erstellte Datensatz in seinen entsprechenden Feldern sämtliche Zugriffs-Zertifikate des diesen Datensatz erstellenden Nutzers. Wird beispielsweise ein Datensatz DS von Nutzer U1 erstellt und der Nutzer-U1 hat gemäß dem Inhalt der ID-Datenbank genau 3 Typen von Zertifikaten (ein Lesezugriffs-Zertifikat "U1.Z-Zert[R]", ein Schreibzugriffs-Zertifikat "U1.Z-Zert[W]" und ein Indexzugriffs-Zertifikat "U1.Z-Zert[S]"), so werden Kopien genau dieser 3 Zugriffs-Zertifikate im Zuge der Speicherung des Datensatzes DS aus der ID-Datenbank erstellt und die in die entsprechenden Felder des Datensatzes DS gespeichert.

Wenn nun der Nutzer-U1 einem anderen Nutzer U2 Leserechte bezüglich des Datensatzes DS in der Quelldatenbank einräumt, bedeutet dies, dass in der ID-Datenbank des Quell-Zugriffsverwaltungssystem eine Verknüpfung bzw. Zuordnung dieses Lesezugriffs-Zertifikat "U1.Z-Zert[R]" des Nutzers U1 und des Nutzer-Zertifikats des Nutzers U2 gespeichert wird. Falls der Nutzer U2 nun zu einem späteren Zeitpunkt auf den Datensatz DS zugreifen will, sendet die Quelldatenbank, die den Datensatz DS beinhaltet, in Antwort auf die Zugriffsanfrage des Nutzers U2 automatisch eine Berechtigungsanfrage an die ID-Datenbank des Quell-Zugriffsverwaltungssystem. Diese Anfrage beinhaltet die in dem Datensatz DS gespeicherten Zugriffsrechte des Erstellers U1. Die ID-Datenbank prüft daraufhin, ob ein dem Nutzer U2 zugeordnetes Nutzer-Zertifikat in der ID-Datenbank mit ein oder mehreren der in dem Datensatz DS gespeicherten Zugriffsrechten des Erstellers U1 verknüpft gespeichert ist. Nur falls dies der Fall ist, und falls der Nutzer U2 außerdem Eigner der Quelldatenbank ist, darf er auf den Datensatz zugreifen.

Nach Ausführungsformen umfasst das zumindest eine Zugriffs-Zertifikat, dass vorzugsweise als Bestandteil des erstellten Datensatzes gespeichert ist, mehrere Zugriffs-Zertifikate für jeweils andere Zugriffsarten. Die mehreren Zugriffs-Zertifikate umfassen zum Beispiel ein Schreibzugriffs-Zertifikat Z.Zert_U2[W] des erstellenden Nutzers, und/oder ein Lesezugriffs-Zertifikat Z.Zert_U2[R] des erstellenden Nutzers und/oder ein Indexzugriffs-Zertifikat Z.Zert_U2[S] des erstellenden Nutzers.

Nach Ausführungsformen handelt es sich bei dem Quell-Zugriffsverwaltungssystem und/oder dem Ziel-Zugriffsverwaltungssystem um ein "standard" Zugriffsverwaltungssystem, das üblicherweise auf einem Standardcomputersystem installiert ist. Ein "Standard" Zugriffsverwaltungssystem kann z.B. MySQL, PostGreSQL, Oracle, SAP Hana, etc. sein. Es ist jedoch auch möglich, dass andere Systeme, die zur strukturierten Speicherung und Abfrage von Daten ausgelegt sind, als Quell-Zugriffsverwaltungssystem und/oder Ziel-Zugriffsverwaltungssystem verwendet werden, z.B. Mikrocontroller, in deren Speicher die Datensätze, Zertifikate und Ermächtigungskettenobjekte sowie die hier beschriebene Programmlogik gespeichert sein kann.

Nach Ausführungsformen handelt es sich bei einem Nutzer-Zertifikat, das einem ersten oder zweiten Nutzer zugeordnet ist, zum Beispiel ein Zertifikat, das von einer Zertifizierungsstelle (certifying authority - CA) spezifisch für eine bestimmte Person herausgegeben wird. Das Nutzer-Zertifikat ist in eine von einer Zertifizierungsstelle herausgegebene Zertifikatskette prüfbar eingeordnet, es ist also beispielsweise bis zum Root-Zertifikat der Zertifizierungsstelle prüfbar. Dies kann vorteilhaft sein, da Zertifizierungsstellen als unabhängige Vertrauensgaranten auf breiter Basis bereits akzeptiert sind und bereits von vielen bestehenden technischen Systemen zur Prüfung der Authentizität bestimmter Nutzer und Nutzeraktionen verwendet werden.

Nach Ausführungsformen sind in einer ID-Datenbank des Quell-Zugriffsverwaltungssystem und/oder die ID-Datenbank des Ziel-Zugriffsverwaltungssystem jeweils eine Mehrzahl von Nutzer-Zertifikaten, eine Mehrzahl von Eigner-Zertifikaten, und/oder eine Mehrzahl von Zugriffs-Zertifikaten gespeichert. Außerdem beinhalten die ID-Datenbanken jeweils Eignerschaftsermächtigungskettenobjekten und/oder Zugriffsermächtigungskettenobjekten.

Ein Eignerschaftsermächtigungskettenobjekt ist ein Datenobjekt, welches eines der Eigner-Zertifikate und ein oder mehrere der Nutzer-Zertifikate beinhaltet (und dadurch einander zuweist). Die Reihung der Nutzer-Zertifikate in dem Eignerschaftsermächtigungskettenobjekt gibt die Sequenz der Nutzer wieder, die dieses Eigner-Zertifikat mit jeweils anderen Nutzern verknüpft haben, deren Nutzer-Zertifikat in dem Eignerschaftsermächtigungskettenobjekt enthalten ist. Die erste Berechtigungshierarchie umfasst eines der Eignerschaftsermächtigungskettenobjekte und dessen Reihung von Nutzer-Zertifikate gibt die hierarchische Beziehungsstruktur der von der ersten Berechtigungshierarchie umfassten Nutzer wieder.

Ein Zugriffsermächtigungskettenobjekt ist ein Datenobjekt, welches eines der Zugriffs-Zertifikate und ein oder mehrere der Nutzer-Zertifikate beinhaltet (und dadurch einander zuweist). Die Reihung der Nutzer-Zertifikate in dem Zugriffsermächtigungskettenobjekt gibt die Sequenz der Nutzer, die dieses Zugriffs-Zertifikat für jeweils andere Nutzer, deren Nutzer-Zertifikat in dem Zugriffsermächtigungskettenobjekt enthalten ist, ausgestellt haben, wieder. Die zweite Berechtigungshierarchie umfasst eines der Zugriffsermächtigungskettenobjekte.

Die Verwendung von Ermächtigungskettenobjekten kann vorteilhaft sein, da im Falle eines von einem bestimmten Nutzer verursachten Fehlers, wie zum Beispiel der Löschung eines für mehrere Nutzer wichtigen Datensatzes, anhand der Zugriffsermächtigungskettenobjekte und/oder Eignerschaftsermächtigungskettenobjekte sofort ersichtlich ist, wer diesem Nutzer die entsprechenden Rechte eingeräumt hat und damit eventuell mitverantwortlich für dessen Fehler ist. Vorzugsweise werden die besagten Ermächtigungskettenobjekte oder zumindest deren Inhalt regelmäßig oder zumindest bei jeder Änderung oder Aktualisierung in eine Logdatei des Zugriffsverwaltungs-Systems geschrieben, sodass die Kette der Verantwortlichkeit auch für jeden denkbaren Zeitpunkt in der Vergangenheit dokumentiert ist und rekonstruiert werden kann.

Nach Ausführungsformen sind die Quelldatenbank frei von Zugriffsermächtigungskettenobjekten und beinhalten für jeden Datensatz nur die Zugriffs-Zertifikate, die dem Nutzer, welcher diesen Datensetz angelegt hat, Zugriff auf diesen Datensatz gewähren.

Die Verknüpfung dieser Zugriffs-Rechte des Datensatzerzeugers mit ein oder mehreren anderen Nutzern um diesen Zugriff auf den Datensatz zu gewähren ist nicht in der Quelldatenbank gespeichert, sondern in der ID-Datenbank. Umgekehrt enthält die ID-Datenbank keine Referenz auf einzelne Datensätze der Quelldatenbank. Dies kann vorteilhaft sein, da die Größe und Komplexität der einzelnen Datensätze der Quelldatenbank begrenzt und logisch von der Verwaltung der Zugriffsrechte weitgehend entkoppelt wird. Die Größe der Datensätze wird also auch dadurch begrenzt, dass nicht die komplette Kette der Berechtigungsübertragungen als Bestandteil der Datensätze gespeichert wird. Insbesondere bei einer Mehrzahl kleiner Datensätze mit identischer Berechtigungsstruktur kann dies den von der Datenbank benötigten Speicherplatz erheblich reduzieren.

Nach Ausführungsformen beinhaltet die ID-Datenbank des Quell-Zugriffsverwaltungssystem einen privaten Signierschlüssel. Die Quelldatenbank beinhaltet einen öffentlichen Signaturprüfschlüssel, welcher zur Prüfung der mit dem Signierschlüssel erstellten Signaturen ausgebildet ist. Im Zuge einer Zugriffsanfrage eines ersten Nutzers auf einen Datensatz der Quelldatenbank ermittelt das Quell-Zugriffsverwaltungssystem, ob dem Nutzer-Zertifikat in der ID-Datenbank eines oder mehrere Zugriffberechtigungsnachweise, die in Kopie als Bestandteil des Datensatzes gespeichert sind, zugeordnet ist. Falls dies der Fall ist, wird dieser Zugriffsberechtigungsnachweis mit dem Signierschlüssel der ID-Datenbank signiert und mit dem entsprechenden Signaturprüfschlüssel der Quelldatenbank geprüft. Der Berechtigungsnachweis wird in signierter Form an die Quelldatenbank übermittelt. Die Quelldatenbank prüft mittels des Signaturprüfschlüssels, ob die Signatur des Berechtigungsnachweises valide ist, wobei der Aufbau der Datenbankverbindung und der Datensatzzugriff nur dann gestattet werden, wenn die Signatur valide ist.

In analoger Weise kann die ID-Datenbank des Ziel-Zugriffsverwaltungssystem einen privaten Signierschlüssel enthalten der von einem korrespondierenden Signaturprüfschlüssel der Zieldatenbank geprüft werden kann.

Dies kann vorteilhaft sein, da es nicht erforderlich ist, einzelne Quelldatenbanken mit Programlogik zur Zertifikatskettenprüfung auszustatten. Ganz allgemein kann durch das beschriebene Verfahren bzw. die beschriebene Datenbankstruktur eine weitgehende Trennung der Datenhaltung (in den Quelldatenbanken bzw. Zieldatenbanken) und der Verwaltung von Zugriffsrechten (in der ID-Datenbank) erzielt werden. Die ID-Datenbank enthält und/oder ist operativ gekoppelt an ein oder mehrere Programmmodule zum Beispiel zur Zertifikatskettenprüfung (zum Beispiel von Nutzer-Zertifikaten bis hin zum Root-Zertifikat von der das Nutzer-Zertifikat ausstellenden Zertifizierungsstelle), zur Speicherung von Änderungen der Zuweisungen von Zertifikaten und Nutzern in einer Log-Datei und in Ermächtigungskettenobjekten sowie zur dynamischen Erstellung von signierten Berechtigungsnachweisen unter Berücksichtigung der in den Ermächtigungskettenobjekten dokumentierten Chronologie der Übertragung von Rechten. Die einzelnen Nutzdaten-Datenbanken verfügen dahingegen nach Ausführungsformen nur über Mittel zur Prüfung, ob für die Nutzdaten-Datenbank selbst bzw. für die darin enthaltenen Datensätze entsprechende Berechtigungen vorliegen oder an diese operativ gekoppelt sind, wobei diese Mittel gegebenenfalls Mittel zur Signaturprüfung umfassen.

Nach einer Ausführungsform beinhaltet jeder der Datensätze in der Quelldatenbank ein oder mehrere Zugriffs-Zertifikate des den Datensatz erstellenden Nutzers. Den Eigner-Zertifikaten in der ID-Datenbank sind jeweils ein oder mehrere Nutzer-Zertifikate so zugeordnet sind, dass die chronologische Sequenz von Nutzern, die sich Eignerrechte der Nutzdaten-Datenbank eingeräumt haben, jeweils in Form einer Sequenz oder hierarchischen Ordnung repräsentiert ist. Diese Zuordnung kann z.B. mittels Eignerschaftsermächtigungskettenobjekten erfolgen. Den Zugriffs-Zertifikaten in der ID-Datenbank sind jeweils ein oder mehrere Nutzer-Zertifikate so zugeordnet, dass die chronologische Sequenz von Nutzern, die sich ein oder mehrere der Zugriffsrechte des den Datensatz erstellenden Nutzers eingeräumt haben, jeweils in Form einer Hierarchie repräsentieren ist. Diese Zuordnung kann z.B. mittels Zugriffsermächtigungskettenobjekten erfolgen. Die den Eigner-Zertifikaten zugeordneten Hierarchien werden unabhängig von den Zugriffs-Zertifikaten zugeordneten Hierarchien dynamisch erzeugt, z.B. dadurch, dass Nutzer mit Eigner-Berechtigung im Hinblick auf eine bestimmte Quelldatenbank einem anderen Nutzer diese Berechtigung mittels einer GUI des Quell-Zugriffsverwaltungssystem übertragen und dieser andere Nutzer diesen Schritt wiederholt, um einem weiteren Nutzer Eigner-Rechte einzuräumen, sodass eine erste Hierarchie von erteilten Eigner-Rechten für diese bestimmte Datenbank entsteht. Werden mehrere Quelldatenbanken verwaltet, kann für jede der Quelldatenbanken eine eigene erste Hierarchie entstehen.

Nach Ausführungsformen repräsentiert jeder oder zumindest einige der Datensätze in der Quelldatenbank jeweils ein Funktionsobjekt. Nur ein Nutzer, dem sowohl ein Eigner-Zertifikat der Quelldatenbank als auch ein Zugriffs-Zertifikat für den Zugriff auf das Funktionsobjekt zugewiesen ist, wird von dem Quell-Zugriffsverwaltungssystem gestattet, die Funktion durchzuführen bzw. die Ausführung der Funktion zu veranlassen. Bei der Funktion kann es sich beispielsweise um das Starten eines Geräts, die Aktivierung oder Bewegung einer Hardwarekomponente, das Öffnen oder das Schließen einer Tür für Gebäude, Räume oder Fahrzeuge, das Öffnen oder das Schließen sonstiger Zutrittsbarrieren oder Verschlussvorrichtungen von Behältnissen oder um eine bestimmte Software Funktionalität handeln. Ferner kann für die Ausführung der Funktion eine Verknüpfung mit einem Attribut-Zertifikat notwendig Voraussetzung sein.

Somit kann die oben beschriebene vorteilhafte, flexible und feingranulare Zugriffskontrolle nicht nur für die Kontrolle des Zugriffs auf Datensätze, sondern auch für die Kontrolle des Zugriffs auf eine Mehrzahl anderer Funktionen einschließlich Hardwarefunktionalitäten verwendet werden.

Die GUI kann beispielsweise von einem ID-Management Modul oder einer ID-Management Applikation implementiert und instanziiert werden, welches Bestandteil eines Zugriffsverwaltungssystems ist oder operativ mit diesem verbunden ist. Das ID-Management Modul bzw. die ID-Management Applikation hat Zugriff auf den Inhalt der ID-Datenbank und vorzugsweise auch auf die Zugriffs-Zertifikate, die in den einzelnen Datensätzen der Nutzdaten-Datenbanken gespeichert sind. Das ID-Management Modul kann zum Beispiel als Plug-In das Zugriffsverwaltungssystem implementiert sein.

Unter "Nutzdaten" werden hier Daten verstanden, die für einen Nutzer, für einen Arbeitsablauf oder für eine Hardware- oder Softwarefunktionalität außerhalb des sie beinhaltenden Zugriffsverwaltungssystems relevant sind und welche nicht der Zugriffsverwaltung von Zugriffsrechten verschiedener Nutzer eines Zugriffsverwaltungssystems dienen. Nutzdaten können insbesondere Text, Zeichen, Bilder und Töne umfassen.

Eine "NoSQL" (englisch für Not only SQL) Datenbank ist eine Datenbank, die einen nicht-relationalen Ansatz verfolgt und keine festgelegten Tabellenschemata benötigt. Zu den NoSQL Datenbanken gehören insbesondere Dokumentenorientierte Datenbanken wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-Datenbanken wie MySQL Cluster, Key-Value-Datenbanken wie Chordless, Google BigTable, GT.M, InterSystems Cache, Membase, Redis, Sortierte Key-Value-Speicher, Multivalue-Datenbanken, Objektdatenbanken wie Db4o, ZODB, spaltenorientierte Datenbanken und temporale Datenbanken wie Cortex DB.

Unter einem "Zugriffsverwaltungssystem" wird im Folgenden ein elektronisches System zur Speicherung und Wiedergewinnung von Daten verstanden. Beispielsweise kann es sich bei dem Zugriffsverwaltungssystem um ein "klassisches Datenbankmanagementsystem" (DBMS) handeln (MySQL, PostgreSQL, Oracle, Hana, etc.). Es ist aber auch möglich, dass die Daten in einem Mikrocontrollerspeicher gespeichert werden und von einem Applikationsprogramm oder einer Chipbasierten Programmlogik verwaltet werden, die als Zugriffsverwaltungssystem arbeitet und kein klassisches DBMS ist. Vorzugsweise werden die Daten in dem Zugriffsverwaltungssystem widerspruchsfrei und dauerhaft gespeichert und verschieden Anwendungsprogrammen und Nutzern in bedarfsgerechter Form effizient zur Verfügung gestellt. Ein Zugriffsverwaltungssystem kann typischerweise ein oder mehrere Datenbanken beinhalten und die darin enthaltenen Datensätze verwalten.

Unter einem "Datensatz" wird im Folgenden eine inhaltlich zusammenhängende und gemeinsam verwaltete Menge an Daten verstanden. Ein Datensatz stellt typischerweise die kleinste strukturelle Einheit des Datenbestandes einer bestimmten Datenbank dar.

Unter einer "Datenbank" wird im Folgenden eine (typischerweise große) Menge von Daten verstanden, die in einem Datenverarbeitungssystem, z.B. einem Computersystem, gespeichert sind und nach bestimmten Kriterien verwaltet werden. Optional kann eine Datenbank auch eine Programmlogik beinhalten, die allein oder in Interoperation mit anderen Komponenten eines Zugriffsverwaltungssystems, das die Datenbank beinhaltet, den Export, Import und/oder Zugriff auf den Inhalt von Datensätzen kontrolliert.

Unter einer "ID-Datenbank" wird im Folgenden eine Datenbank verstanden, welche nutzerbezogene Informationen wie zum Beispiel Nutzer-Zertifikate sowie den diesen Nutzern zugewiesenen Rechte in Form von weiteren Zertifikaten (Zugriffs-Zertifikate, Eigner-Zertifikate) enthält und verwaltet. In Abgrenzung zu Quelldatenbanken und Zieldatenbanken, die auch unter dem Begriff "Nutzdaten-Datenbanken" zusammengefasst werden können und welche vorwiegend der Speicherung von Nutzdaten dienen, dient eine ID-Datenbank vorwiegend der Verwaltung der den Nutzern im Hinblick auf die Nutzdaten zugewiesenen Eigner- und Zugriffsrechte.

Unter einem "Nutzer" wird im Folgenden die digitale Repräsentanz einer menschlichen Person oder einer Softwarelogik verstanden, die sich bei einem Zugriffsverwaltungssystem registriert hat. Bei einem Nutzer kann es sich insbesondere um einen Datenbanknutzer handeln, der eine bestimmte menschliche Person repräsentiert.

Unter einem "Zertifikat" wird hier im Folgenden ein digitales Zertifikat verstanden. Ein Zertifikat ist ein Datenwert oder eine Kombination aus Datenwerten, der bestimmte Eigenschaften von Nutzern oder anderen Objekten bestätigt und dessen Authentizität und Integrität durch kryptografische Verfahren geprüft werden kann. Das digitale Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können. Die Ausstellung eines Nutzer-Zertifikats erfolgt vorzugsweise durch eine offizielle Zertifizierungsstelle, die Certification Authority (CA). Ein Zugriffs-Zertifikat und/oder ein Eigner-Zertifikat können vorzugsweise als Zahlenwert ausgebildet sein, welchem in der ID-Datenbank Metadaten zugeordnet sein können. Die Verwendung von Zahlwerten kann vorteilhaft sein, da diese wenig Speicherplatz benötigen wenn sie als Bestandteil eines Datensatzes gespeichert sind und da sie sich gut indexieren lassen und nicht einer Variation durch leicht modifizierte Metadaten unterworfen sind. Ein Zertifikat, insbesondere ein Nutzer-Zertifikat, kann auch nach dem Standard X.509 ausgebildet sein, das einen öffentlichen Schlüssel beinhaltet und die Identität des Inhabers und weitere Eigenschaften eines öffentlichen kryptographischen Schlüssels des Zertifikats bestätigt.

Unter einer "GUI" wird im Folgenden eine graphische Benutzeroberfläche verstanden.

Unter einem "Root-Zertifikat" oder "Wurzel-Zertifikat" wird im Folgenden dasjenige Zertifikat bezeichnet, das den Vertrauensanker einer PKI darstellt. Da das Wurzel-zertifikat und damit die gesamte Zertifikatshierarchie nur vertrauenswürdig bleibt, solange dessen privater Schlüssel ausschließlich der ausstellenden Partei bekannt ist, kommt dem Schutz der Root-CA höchste Bedeutung zu.

Unter einem "Eigner" oder "Eigentümer" wird im Folgenden ein Nutzer verstanden, dem durch Zuweisung eines Eigner-Zertifikats das Recht im Hinblick auf eine bestimmte Datenbank eingeräumt wurde, aus dieser Datensätze zu exportieren und/oder in diese Datenbank Daten zu importieren. Optional wird dem Nutzer durch das Eigner-Zertifikat auch das Recht eingeräumt, in dieser Datenbank Datensätze zu erstellen und eine Datenbankverbindung mit dieser Datenbank aufzubauen. Nach einer Ausführungsform leiten sich alle Eigner-Zertifikate, die für die Nutzdaten-Datenbanken eines Zugriffsverwaltungs-System ausgestellt wurden, vom Nutzer-Zertifikat ("CEO-Zertifikat") desjenigen Nutzers ab, der die höchste Position innerhalb der Organisation, die das Zugriffsverwaltungs-System betreibt, innehat. Die Ableitung aus diesem Nutzer-Zertifikat bedeutet, dass jede Kopie dieses Eigner-Zertifikats per Zertifikatskettenprüfung auf Validität überprüft werden kann, wobei die für die Zertifikatskettenprüfung verwendete Zertifikatskette das "CEO-Nutzer-Zertifikat" beinhaltet.

Unter einem "zugriffsberechtigten Nutzer" wird im Folgenden ein Nutzer verstanden, dem durch Zuweisung eines Zugriffs-Zertifikats das Recht eingeräumt wurde, auf einen Datensatz, der dieses Zugriffs-Zertifikat beinhaltet, auf die Weise zuzugreifen, die in diesem Zugriffs-Zertifikat spezifiziert ist, sofern weitere notwendige Kriterien wie z.B. die Eigner-Status bezüglich der den Datensatz enthaltenden Datenbank erfüllt sind.

Eignerschaftsermächtigungskettenobjekte und Zugriffsermächtigungskettenobjekte sind Datenwerte, die einem oder mehreren Nutzern beistimmte Eigenschaften zuweisen. Beispielsweise können die Datenwerte als Datensätze einer Datenbank oder Teilen von Datensätzen einer Datenbank ausgebildet sein oder in anderer Weise auf einem (vorzugsweise nicht flüchtigen) Speichermedium gespeichert sein. Die Eignerschaftsermächtigungskettenobjekte und Zugriffsermächtigungskettenobjekte können beispielsweise mehrere Nutzerzertifikate sowie ein Eigner-Zertifikat oder Zugriffs-Zertifikat enthalten, wobei die mehreren Nutzerzertifikate eine Geschichte der Übertragung von Eigner- bzw. Zugriffsrechten von Nutzer zu Nutzer repräsentiert.

Die Verwendung von Ordinalzahlen wie erstes, zweites, drittes etc. dient hier allein der Unterscheidung von Elementen und/oder Personen mit ansonsten gleicher Bezeichnung und soll keine bestimmte Reihenfolge implizieren. Ferner kann es sich bei Elementen und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Ein exemplarisches Verfahren zur Zugriffskontrolle auf Datensätze eines Zugriffsverwaltungssystems sowie ein entsprechendes exemplarisches Zugriffsverwaltungssystem sind in den anhängenden Zeichnungen 1 bis 2 sowie 5 bis 10 veranschaulicht. Darin zeigen:
- Figur 1: ein Blockdiagramm einer Ausführungsform eines erfindungsgemäßen Quell-Zugriffsverwaltungssystem mit mehreren Quelldatenbanken,
- Figur 2: den Vorgang der Erstellung von Berechtigungsnachweisen für zwei Nutzer gemäß einer Ausführungsform des erfindungsgemäßen Verfahrens,
- Figur 3: im Stand der Technik verwendete Verfahren zur Zugriffskontrolle entlang einer vorgegebenen Unternehmenshierarchie,
- Figur 4: im Stand der Technik verwendete Verfahren zur Zugriffskontrolle basierend auf der Verwendung von Rollen,
- Figur 5: den Ablauf der Einräumung von Zugriffsrechten über eine Sequenz von Nutzern,
- Figur 6: Ein Beispiel für Nutzdaten, die Bestandteil eines Datensatzes sind,
- Figur 7: zwei dynamisch und unabhängig voneinander generierte Hierarchien, entlang welcher Zugriffsrechte und Eigner-Rechte über eine Kaskade von Nutzern vergeben wurden,
- Figur 8: ein Flussdiagramm einer weiteren Ausführungsform eines erfindungsgemäßen Verfahrens, und
- Figur 9: ein Blockdiagramm eines Systems mit einem Quell-Zugriffsverwaltungssystem und einem Ziel-Zugriffsverwaltungssystem.

### Ausführliche Beschreibung

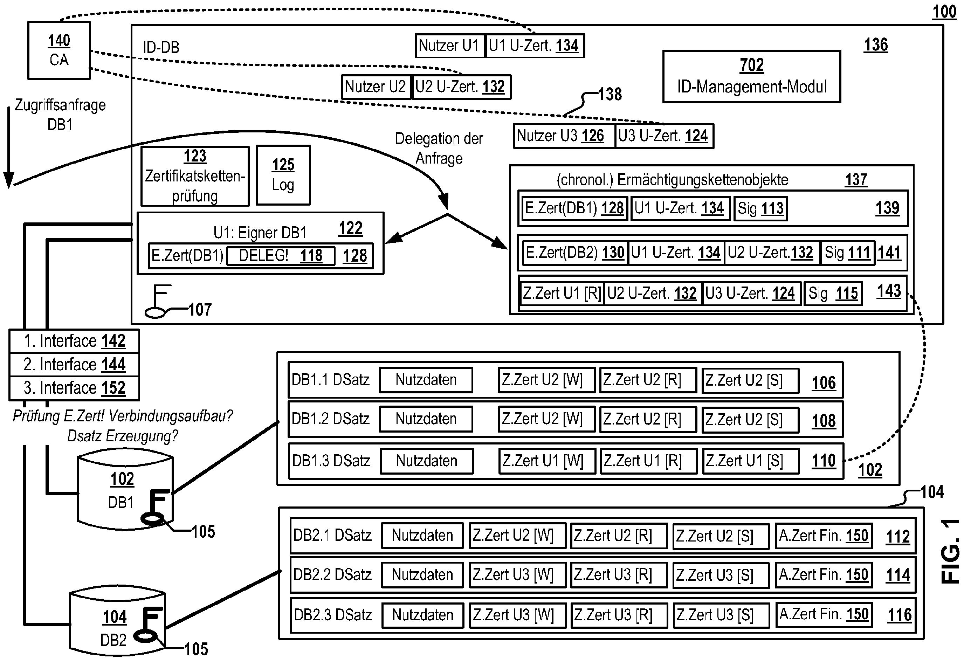

**Figur 1** zeigt ein Blockdiagramm einer Ausführungsform eines erfindungsgemäßen Quell-Zugriffsverwaltungssystems 100 mit mehreren Quell-Datenbanken 102 DB1, 104 DB2 und einer ID-Datenbank 136. Das Zugriffsverwaltungssystem 100 ist dazu konfiguriert, den Zugriff von mehreren ersten Nutzern U1, U2, U3, ...,, die sich beim Quell- Zugriffsverwaltungssystem registriert haben, auf mehrere Datensätze 112, 114, 116 und den Export und/oder Import von Datensätzen zu kontrollieren. Bei dem Quell-Zugriffsverwaltungssystems 100 kann es sich um ein Quell-DBMS handeln und bei den ersten Nutzern um Datenbanknutzer des Quell-DBMS.

Beispielsweise ist einem ersten Nutzer U1 ein Nutzer-Zertifikat 134 zugeordnet. Das Nutzer-Zertifikat 134 wurde von einer Zertifizierungsstelle 140 für eine Person ausgestellt, die beim Quell-Zugriffsverwaltungssystem als Nutzer-U1 registriert ist. Nutzer U1 wie auch die anderen Nutzer U2, U3 könnten beispielsweise Mitarbeiter eines Unternehmens repräsentieren. In analoger Weise könnten auch den weiteren Mitarbeitern des Unternehmens Nutzer-Zertifikate 132,124 zugeordnet sein, die von der Zertifizierungsstelle ausgestellt wurden. Die Nutzer-Zertifikate 134,132,124 können durch Zertifikatskettenprüfung bis zum entsprechenden Root-Zertifikat der Zertifizierungsstelle geprüft werden.

Der erste Nutzer U1 könnte beispielsweise Geschäftsführer eines Unternehmens sein, dessen IT-System mehrere Quelldatenbanken DB1, DB2 umfasst. Mit anderen Worten, der erste Nutzer U1 trägt die Verantwortung für sowie oberste Verfügungshoheit über die Quelldatenbanken DB1, DB2. Entsprechend kann dem ersten Nutzer U1 ein Eigner-Zertifikat 128 für die Quelldatenbank DB1 zugeordnet sein. Die Zuordnung, auch "Verknüpfung" genannt, kann beispielsweise in Form eines Ermächtigungskettenobjekts 139 implementiert und in einer ID-Datenbank 136 des Quell-Zugriffsverwaltungssystems gespeichert sein.

Das Quell-Zugriffsverwaltungssystem 100 ist also dazu ausgebildet, ein Eigner-Zertifikat, zum Beispiel Eigner-Zertifikat 128 bezüglich DB1 oder ein Eigner-Zertifikat 130 bezüglich DB2 mit dem Nutzer U1 zu verknüpfen. Dies kann durch Speicherung des Eigner-Zertifikats 128 und des Nutzer-Zertifikat 134 des ersten Nutzers U1 in einem Eignerschaftsermächtigungskettenobjekt 139 erfolgen bzw. durch Speicherung des Eigner-Zertifikat 130 und des Nutzer-Zertifikats 134 des Nutzers U1 in einem Eignerschaftsermächtigungskettenobjekt 141. Ein Eigner-Zertifikat für eine Quelldatenbank ist ein Zertifikat, welches einer oder mehreren Quelldatenbanken zugeordnet ist und jedem Nutzer, mit dem es verknüpft ist, das Recht gewährt, Datensätze dieser Quelldatenbank zu exportieren. Optional kann das Eigner-Zertifikat weitere Rechte verleihen, z.B. das Recht, neue Datensätze in der Quelldatenbank anzulegen. Beispielsweise gewährt das Eigner-Zertifikat 128 jedem Nutzer, dem es zum Beispiel durch ein Eignerschaftsermächtigungskettenobjekt zugeordnet ist, das Recht, Datensätze aus der Quelldatenbank DB1 verschlüsselt zu exportieren und einen oder mehrere neue Datensätze in der Quelldatenbank DB1 zu erstellen.

Das Zugriffsverwaltungssystem 100 beinhaltet eine erste Schnittstelle 142, die es dem Nutzer U1, dem das Eigner-Zertifikat 128 für die Datenbank DB1 zugeordnet ist, ermöglicht, eine zweite Verknüpfung des ersten Eigner-Zertifikat 128 für die Quelldatenbank DB1 mit einem weiteren beim Quell-Zugriffsverwaltungssystem registrierten Nutzer U2 zu erstellen. Diese zweite Verknüpfung mit dem ersten Eigner-Zertifikat ermöglicht es dem Nutzer U2, nun seinerseits Datensätze in der Quelldatenbank DB1 anzulegen. Auch der Nutzer U2 kann sich, sofern das die zweite Verknüpfung mit dem ersten Eigner-Zertifikat gemäß seines Delegierbarkeitsparameters delegierbar ist, dieser ersten Schnittstelle bedienen um weiteren beim System 100 registrierten Nutzern seines Vertrauens identische oder veränderte Kopien des Eigner-Zertifikats für die Datenbank DB1 auszustellen und in Verbindung mit einem Nutzer-Zertifikat dieser weiteren Nutzer in der ID-Datenbank zu speichern, zum Beispiel in Form weiterer Eignerschaftsermächtigungskettenobjekte 139, 141.

Das Quell-Zugriffsverwaltungssystem 100 beinhaltet eine zweite Schnittstelle 144, die es dem Nutzer U2, der einen Datensatz 106, 108 in der Nutzdaten-Datenbank 102 erstellt hat (nachdem ihm bereits z.B. von dem Nutzer U1 ein Eigner-Zertifikat für die DB1 ausgestellt wurde), ermöglicht, mindestens ein Zugriffs-Zertifikat zu erstellen und mit dem Nutzer-Zertifikat eines Nutzers, dem Zugriff auf diesen Datensatz gewährt werden soll, zu verknüpfen. Bei dem Nutzer, dem Zugriff gewährt werden soll, kann es sich um einen beliebigen anderen Nutzer, der bei dem Quell-Zugriffsverwaltungssystem registriert ist und der das Vertrauen des Nutzers U2 (Datensatzersteller) besitzt, handeln. Bei den Zugriffs-Zertifikaten des Nutzers U2 kann es sich zum Beispiel um ein Schreibzugriffs-Zertifikat Z.Zert_U2[W], ein Lesezugriffs-Zertifikat Z.Zert_U2[R] und/oder ein Indexzugriffs-Zertifikat Z.Zert_U2[S] handeln. Ein Zugriffs-Zertifikat kann also eine Art des Datensatzzugriffs auf den von dem Nutzer U2 erstellten Datensatz spezifizieren.

Falls nun der Nutzer U1 auf einen Datensatz 106, 108, den der Nutzer U2 erstellt hat, zugreifen will, prüft das Quell-Zugriffsverwaltungssystem die Zugriffsberechtigung des Nutzers U1 auf einen von dem zweiten Nutzer angelegten Datensatz 106, 108. Der gewünschte Zugriff wird dem Nutzer U1 nur dann gewährt, wenn das Zugriffsverwaltungssystem feststellt, dass dem ersten Nutzer U1 sowohl ein Eigner-Zertifikat für die Quelldatenbank 102 als auch ein Zugriffs-Zertifikat Z.Zert U2 [W] (oder [R] oder [S]) für den Zugriff auf den Datensatz zugeordnet ist.

Die einzelnen Datensätze 106, 108, 110, 112, 114, 116 enthalten Zugriffs-Zertifikate, die der Nutzer, der den betreffenden Datensatz erstellt hat, diesen Datensätzen im Zuge der Erstellung zuweist. Beispielsweise kann das Quell-Zugriffsverwaltungssystem 100 während des Vorgangs der Erstellung eines neuen Datensatzes im Hintergrund automatisch prüfen, welche Zugriffs-Rechte für den Nutzer, der gerade einen Datensatz erstellt, in der ID-Datenbank hinterlegt sind. Dies kann insbesondere dann vorteilhaft sein, wenn jedem Nutzer ein vordefinierter Satz an Zugriffs-Zertifikaten (zum Beispiel für Lese-, Schreib-, und Indexzugriffsrechte) zugewiesen ist welcher automatisch auch komplett jedem neu erstellten Datensatz zugewiesen werden soll. Diese Situation ist in Figur 1 dargestellt. Alternativ dazu ist es jedoch auch möglich, dass jedem Nutzer mehrere verschiedene Zugriffs-Zertifikate (der gleichen Zugriffsart, zum Beispiel Lesezugriff) in der ID-Datenbank zugewiesen sind und der Nutzer manuell über eine GUI im Zuge der Datensatzerstellung auswählen kann, welche dieser Zugriffs-Zertifikate dem neuen Datensatz zugewiesen werden sollen. Dies kann vorteilhaft sein, da der Nutzer für eine große Mehrzahl von Datensätzen, die er anliegt und die zum Beispiel ähnlichen Inhalts sind oder ein ähnliches Vertraulichkeitsniveau besitzen, den gleichen Satz an Zugriffs-Zertifikaten im Zuge der Erstellung zuweisen kann. Für den Fall aber dass der Nutzer zum Beispiel zehn verschiedene Kreditkarten verwaltet und die vertraulichen Kreditkartennummern in zehn verschiedenen Datensätzen speichert, hat der Nutzer auch die Möglichkeit, jedem dieser Datensätze ein anderes Zugriffs-Zertifikat zuzuweisen. Dies hat den Vorteil, dass der Ersteller jedes dieser Kreditkartennummern-Datensätze weiteren Nutzern selektiv nur für einen bestimmten Kreditkartennummern-Datensatz gewähren kann, also ohne den betreffenden weiteren Nutzer automatisch auch Zugriffsrechte für die anderen Kreditkartendatensätze zu geben. Der Einfachheit halber beziehen sich die meisten der hier beschriebenen Ausführungsformen und Beispiele darauf, das einem Nutzer 3 Zugriffs-Zertifikate für Lese-, Schreib-, und Indexzugriffsrechte zugewiesen sind, die im Zuge einer Datensatzerstellung durch den Nutzer automatisch in diesen Datensatz integriert werden. Diese Beispiele sind jedoch so zu verstehen, dass nach alternativen Ausführungsformen und Beispielen der Nutzer, der einen Datensatz erstellt, auch manuell eine bestimmte Untermenge aus vordefinierten und ihm zugewiesenen Zugriffs-Zertifikaten auswählen und in den erstellten Datensatz integrieren kann.

Die in Figur 1 dargestellten Datensätze 106, 108, und 112 wurden beispielsweise von dem Nutzer U2 angelegt. Der Datensatz 110 wurde von dem Nutzer U1 angelegt. Der Datensatz 116 wurde von dem Nutzer U3 angelegt. Die vordefinierten Zugriffs-Zertifikate der jeweiligen Ersteller wurden in die Datensätze integriert. Zumindest die Ersteller haben also vollumfänglichen Zugriff auf ihre Datensätze, sofern sie auch über ein Eigner-Zertifikat für die jeweilige Nutzdaten-Datenbank verfügen. Es ist jedoch durchaus möglich, dass weitere Nutzer Zugriff auf einzelne Datensätze haben. Diese Information ist jedoch nicht in der Nutzdaten-Datenbank enthalten, sondern in Form von Zugriffsermächtigungskettenobjekten 143 in der ID-Datenbank gespeichert. So ist beispielsweise aus dem Objekt 143 ersichtlich, dass ein Zugriffs-Zertifikat des Nutzers U1, dass ein Leserecht spezifiziert, von dem Ersteller U1 dem Nutzer U2 zugewiesen wurde, indem das Nutzer-Zertifikat 132 dieses Nutzers U2 innerhalb des Objekts 143 mit dem Lesezugriffs-Zertifikat von Nutzer U1 verknüpft wurde. Außerdem ist aus dem Objekt 143 ersichtlich, dass der Nutzer U2 dieses Leserecht auf einen weiteren Nutzer U3 übertragen (weitergegeben) hat, indem das Nutzer-Zertifikat 124 des Nutzers U3 innerhalb des Objekts 143 mit dem Lesezugriffs-Zertifikat von U1 verknüpft wurde. Im Zuge jeder Übertragung eines Zugriffsrechts bzw. damit einhergehend im Zuge jeder Zuweisung eines weiteren Nutzer-Zertifikats zu einem bestimmten Zugriffs-Zertifikat wird ein neues Zugriffsermächtigungskettenobjekt in der ID-Datenbank vom Zugriffsverwaltungssystems erstellt.

Dem menschlichen Nutzer wird vorzugsweise eine intuitive GUI angeboten um Nutzern Zugriffs- bzw. Eigner-Rechte zu übertragen und dadurch im Hintergrund die Erzeugung weiterer Zertifikate oder weiterer Verknüpfungen von Zugriffs- bzw. Eigner-Zertifikaten mit Nutzer-Zertifikaten zu initialisieren. Das Zugriffsermächtigungskettenobjekt 143 impliziert also, dass sowohl Nutzer U2 als auch Nutzer U3 (und selbstverständlich auch Nutzer U1) Lesezugriff auf die von Nutzer U1 erstellten Datensätze, zum Beispiel Datensatz 110, haben.

In analoger Weise spezifizieren Eignerschaftsermächtigungskettenobjekte 139, 141 eine Kette aus ein oder mehreren Nutzern, die anderen Nutzern Eigner-Zertifikate zugewiesen und dadurch Eigner-Rechte übertragen haben. So geht beispielsweise aus Objekt 139 hervor, dass der Nutzer-U1 Eigner-Rechte im Hinblick auf die Nutzdaten-Datenbank-DB1 besitzt, da das Nutzer-Zertifikat 134 des Nutzers U1 in dem Objekt 139 dem Eigner-Zertifikat 128 der DB1 zugewiesen ist. Das Objekt 141 spezifiziert, dass der Nutzer U1 die Eigner-Rechte für die Datenbank DB2 an einen weiteren Nutzer U2 übertragen hat.

Falls ein Nutzer eine Zugriffsanfrage auf eine bestimmte Quelldatenbank 102 absendet, prüft das Quell-Zugriffsverwaltungssystem 100 oder eine Komponente desselben, zum Beispiel die betreffende Quelldatenbank 102, ob dem Nutzer, von dem die Anfrage stammt, in der ID-Datenbank ein Eigner-Zertifikat für diese Quelldatenbank zugewiesen ist. Beispielsweise könnte dieser Schritt eine Analyse sämtlicher Eignerschaftsermächtigungskettenobjekte, die sich auf diese Nutzdaten-Datenbank 102 beziehen, umfassen. Nur falls der anfragende Nutzer diese Eignerrechte hat, wird ihm der Aufbau einer Datenbank Verbindung zu der Nutzdaten-Datenbank 102 gewährt und, falls dies angefragt wird, auch die Erstellung neuer Datensätze in dieser Datenbank gewährt. Damit dieser Nutzer jedoch auch auf einzelne Datensätze lesend oder schreibend zugreifen kann oder über einen Index in Erfahren bringen kann, ob ein bestimmter Datensatz überhaupt existiert, müssen ihm (also seinem Nutzer-Zertifikat) in der ID-Datenbank auch die entsprechenden Rechte zugewiesen sein. Das Zugriffsverwaltungssystem prüft vor jedem Zugriff eines Nutzers mit Eignerschaftsrechten also zusätzlich, ob der Nutzer über die erforderlichen Zugriffsrechte und ggf. Attribute verfügt.

Falls ein beim System 100 registrierter Nutzer einen Exportbefehl zum Export aller oder einiger ausgewählter Datensätze der Quelldatenbank 102 absendet, prüft das Quell-Zugriffsverwaltungssystem 100 oder eine Komponente desselben, zum Beispiel die betreffende Quelldatenbank 102, ob dem Nutzer, von dem der Exportbefehl stammt, in der ID-Datenbank ein Eigner-Zertifikat für diese Quelldatenbank zugewiesen ist. Beispielsweise könnte dieser Schritt eine Analyse sämtlicher Eignerschaftsermächtigungskettenobjekte, die sich auf diese Nutzdaten-Datenbank 102 beziehen, umfassen. Nur falls der Nutzer diese Eignerrechte hat, wird ihm der Export der Datensätze aus der Quelldatenbank erlaubt, wobei die Datensätze im Zuge des Exports vom System 100 automatisch verschlüsselt werden. Die Verschlüsselung erfolgt so, dass diese nur mit einem Schlüssel entschlüsselt werden können, der integraler und nicht-extrahierbarer Bestandteil eines Ziel-Zugriffsverwaltungssystems sind. Die exportierten Datensätze können also auch vom Nutzer, der den Export vornimmt, außerhalb des Systems 100 nicht entschlüsselt werden.

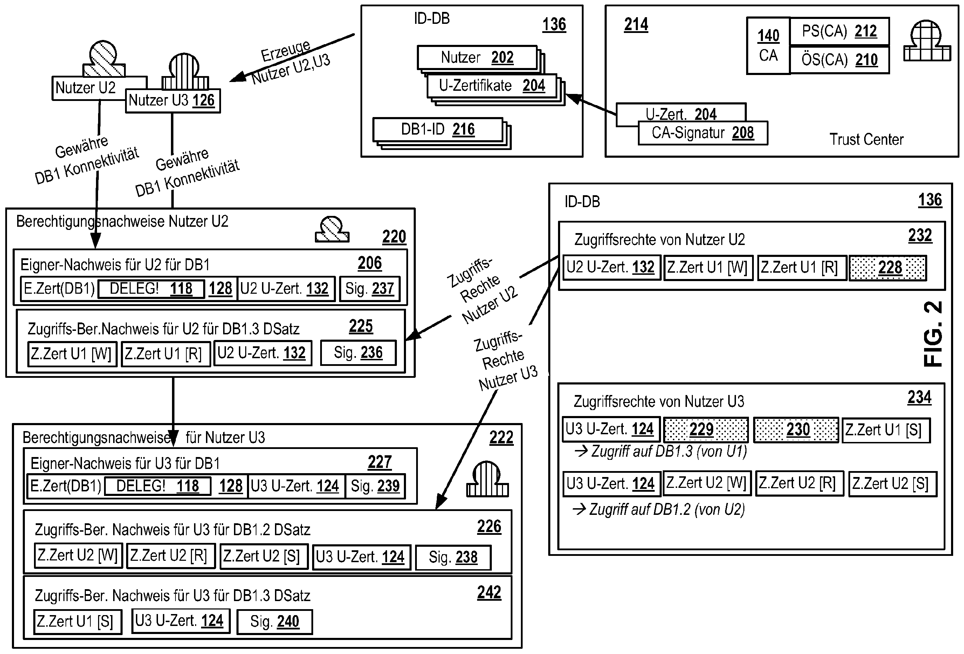

Optional können die einzelnen Ermächtigungskettenobjekte 139, 141, 143 in der ID-Datenbank des Quell-Zugriffsverwaltungssystems 100 mit dem privaten Signaturschlüssel 107 des Quell-Zugriffsverwaltungssystems signiert werden. Zusätzlich oder alternativ dazu können Berechtigungsnachweise, die in Antwort auf eine Zugriffsanfrage eines Nutzers an eine Nutzdaten-Datenbank von der ID-Datenbank für den Nutzer dynamisch erstellt werden, signiert werden (siehe Beschreibung Fig. 2).

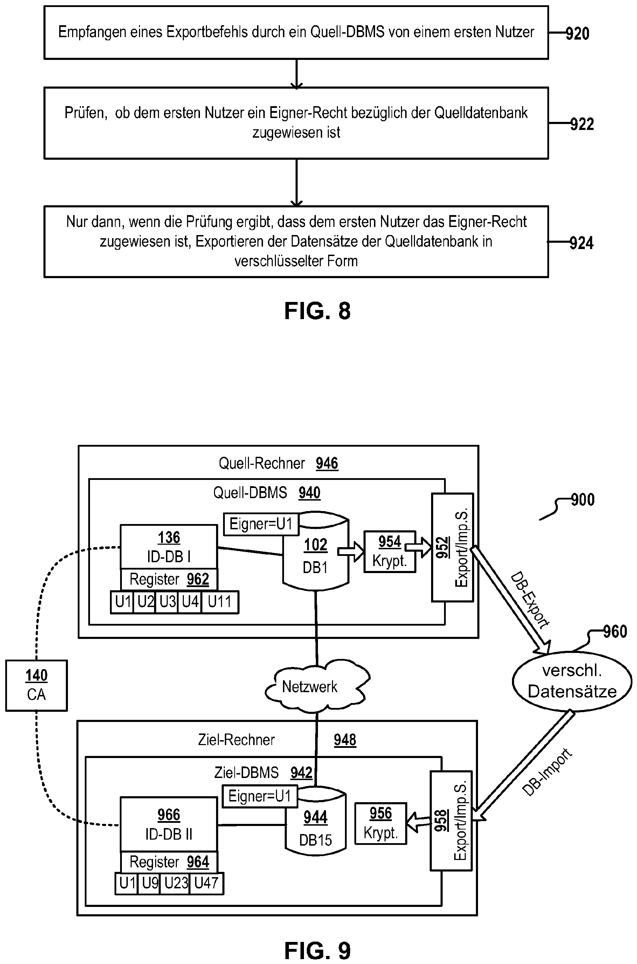

Das Quell-Zugriffsverwaltungssystem kann an ein Ziel-Zugriffsverwaltungssystem gekoppelt sein wie dies z.B. in Figur 9 dargestellt ist, sodass die verschlüsselten exportierten Datensätze in das Ziel-Zugriffsverwaltungssystem importiert und dort von mit einem entsprechenden Schlüssel entschlüsselt werden können. Im Wesentlichen kann das Ziel-Zugriffsverwaltungssystem die gleichen Komponenten (ID-Datenbank mit registrierten Nutzern, Nutzer-Zertifikaten, Zugriffs-Zertifikaten, Ermächtigungskettenobjekten und ein oder mehreren Zieldatenbanken) beinhalten wie das in Figur 1 und 2 dargestellten Ziel-Zugriffsverwaltungssystem. Hier ist der Eigner-Status eines beim Ziel-Zugriffsverwaltungssystem registrierten Nutzers im Hinblick auf eine Zieldatenbank Voraussetzung dafür, dass dieser Nutzer Datensätze in die Zieldatenbank importieren kann, wobei diese automatisch mit einem privaten Schlüssel dieses Nutzers, der in der ID-Datenbank des Ziel-Zugriffsverwaltungssystems geschützt gespeichert ist, entschlüsselt. Falls eine andere Person die Datensätze importieren will als die Person, die sie exportiert hat, kann das Ziel-Zugriffsverwaltungssystem keinen geeigneten Entschlüsselungsschlüssel identifizieren und der Import scheitert.

**Figur 2** illustriert den Vorgang der Erstellung von Berechtigungsnachweisen für zwei Nutzer U2, U3. Wesentliche Komponenten der hier dargestellten Ausführungsform entsprechen den in Figur 1 beschriebenen Komponenten, jedoch können die Eignerschafts-und Zugriffsrechtsverhältnisse der in Figur 2 abgebildeten Situation von der in Figur 1 abgebildeten Situation abweichen.

In der ID-Datenbank des Quell-Zugriffsverwaltungssystems 100 ist mehreren Nutzern 202 jeweils ein Nutzer-Zertifikat 204 zugewiesen. Die Nutzer-Zertifikate werden vorzugsweise von einer Zertifizierungsstelle 140 herausgegeben und mit einem privaten Signierschlüssel 212 der Zertifizierungsstelle signiert. Die Zertifizierungsstelle stellt zudem einen öffentlichen Signaturprüfschlüssel 210 zur Verfügung (zum Beispiel über entsprechende öffentliche Schlüsselverzeichnisse, die über das Internet einsehbar sind). Das bedeutet, dass die ID-Datenbank 136 die Validität eines Nutzer-Zertifikats durch Zertifikatskettenprüfung unter Einbeziehung des öffentlichen Signaturprüfschlüssels 210 der Zertifizierungsstelle prüfen kann. In der ID-Datenbank können Identifikatoren 216 mehrerer Quelldatenbanken gespeichert sein, welchen wiederum jeweils ein oder mehrere eigene-Zertifikate zugewiesen sein können. Vorzugsweise enthält die ID-Datenbank jedoch keine Nutzdaten oder Verweise auf einzelne Datensätze in Quelldatenbanken.

Wenn ein Nutzer U2, zum Beispiel über eine grafische Benutzeroberfläche, Zugriff auf Datensätze, die in der Quelldatenbanken DB1 gespeichert sind, anfordert, oder einen Exportbefehl zum Export dieser Datensätze an das System 100 sendet, wird von dem Zugriffsverwaltungssystem 100 automatisch eine Anfrage für diesen Nutzer U2 generiert und an die ID-Datenbank gesendet. Die Abarbeitung der Anfrage beinhaltet eine Analyse einer Menge an Ermächtigungskettenobjekten 137 um festzustellen, welche Eigner-Zertifikate und Zugriffs-Zertifikate dem Nutzer-Zertifikat 132 des Nutzers U2 zugewiesen sind. Als Antwort an diese Berechtigungsanfrage erstellt die ID-Datenbank einen Berechtigungsnachweis 220 für den Nutzer U2. Aus diesem Berechtigungsnachweis geht hervor, dass dem Nutzer U2 ein Eigner-Zertifikat 128 für die Datenbank-DB1 zugewiesen ist, der Nutzer also zum Aufbau einer Datenbank Verbindung zur DB1 und zum Export der darin befindlichen Datensätze berechtigt ist. Außerdem geht aus dem Berechtigungsnachweis hervor, dass der Nutzer U2 berechtigt ist für den Schreibzugriff auf sämtliche Datensätze, die von ihm und dem Nutzer-U1 erstellt wurden.

Beispielsweise kann der Berechtigungsnachweis gegliedert sein in einen Eigner-Nachweis 206 für den Nutzer U2 im Hinblick auf den Export von Datensätzen aus der Quelldatenbank DB1 und in einen Zugriffsberechtigungsnachweis im Hinblick auf eine bestimmte Zugriffsart und im Hinblick auf alle Datensätze, die von einem bestimmten Nutzer erstellt wurden.

Der Berechtigungsnachweis 202 und/oder die jeweiligen Teilberechtigungsnachweise 206, 225 können eine Signatur 237, 236 enthalten, die mit dem privaten Signierschlüssel 107 der ID-Datenbank dynamisch in Antwort auf die Berechtigungsanfrage erzeugt wurde. Jede der Nutzdaten-Datenbanken beinhaltet einen öffentlichen Signaturprüfschlüssel 105, der mit dem privaten Signierschlüssel 107 ein asymmetrisches kryptographisches Schlüsselpaar bildet. Bevor die Nutzdaten-Datenbank-DB1 dem Nutzer U2 den Aufbau einer Datenbankverbindung und/oder den Zugriff auf einzelne Datensätze erlaubt, wird neben dem Vorhandensein der entsprechenden Zertifikate auch die Validität der Signaturen 237, 236 geprüft und der Verbindungsaufbau bzw. der Datensatzzugriff nur im Falle der Validität der Signatur zugelassen.

In analoger Weise wird in Antwort auf eine Zugriffsanfrage des Nutzers U3 von der ID-Datenbank der Berechtigungsnachweis 222 generiert und signiert, aus welchem hervorgeht, dass Nutzer U3 zum Export von Datensätzen aus der Quelldatenbank-DB1 berechtigt ist. Außerdem geht aus den Berechtigungsnachweisen 226, 242 hervor, dass der Nutzer U3 auf die von Nutzer U2 erstellten Datensätze lesend und schreibend zugreifen darf und auch eine Indexabfrage um zu erfahren, ob ein bestimmter Datensatz, den der Nutzer erstellt hat, überhaupt existiert, durchführen darf. Außerdem darf Nutzer-U3 eine entsprechende Indexabfrage für Datensätze durchführen, die der Nutzer-U1 erstellt hat, jedoch nicht schreibend oder lesend zugreifen.

Dass der Nutzer U2 auf die Datensätze des Nutzers U1 nur lesend und schreibend, aber nicht per Indexzugriff zugreifen darf, geht aus dem Fehlen eines entsprechenden Zugriffs-Zertifikats in einem entsprechenden Zugriffsermächtigungskettenobjekt hervor. Dieses Fehlen ist durch Box 228 angedeutet.

Dass der Nutzer U3 auf die Datensätze des Nutzers U1 nicht schreibend oder lesend zugreifen darf, geht aus den Boxen 229, 230 hervor. Wenn einem Nutzer in der ID-Datenbank Zugriffsrechte in Form entsprechender Zugriffs-Zertifikate nicht zugewiesen sind, enthält auch der dynamisch erstellte Berechtigungsnachweis 220, 222 die entsprechenden Rechte nicht.

Vorzugsweise enthalten die dynamisch erstellten Berechtigungsnachweise 220, 222 nicht die gesamte Kette der Nutzer-Zertifikate derjenigen Nutzer, die anderen Nutzern entsprechende Eigner-Zertifikate oder Zugriffs-Zertifikate zugewiesen haben, sondern nur die dem anfragenden Nutzer zugewiesenen Eigner- und Zugriffs-Zertifikate sowie optional noch das Nutzer-Zertifikat des anfragenden Nutzers. Für den Nachweis der Berechtigung ist eine Dokumentation der Übertragungskette der Rechte nicht relevant. Dadurch, dass die Berechtigungsnachweise frei sind von den Nutzer-Zertifikaten der Übertragungskette, kann die Größe der Berechtigungsnachweise reduziert, das Verfahren beschleunigt und der Datenverkehr reduziert werden.

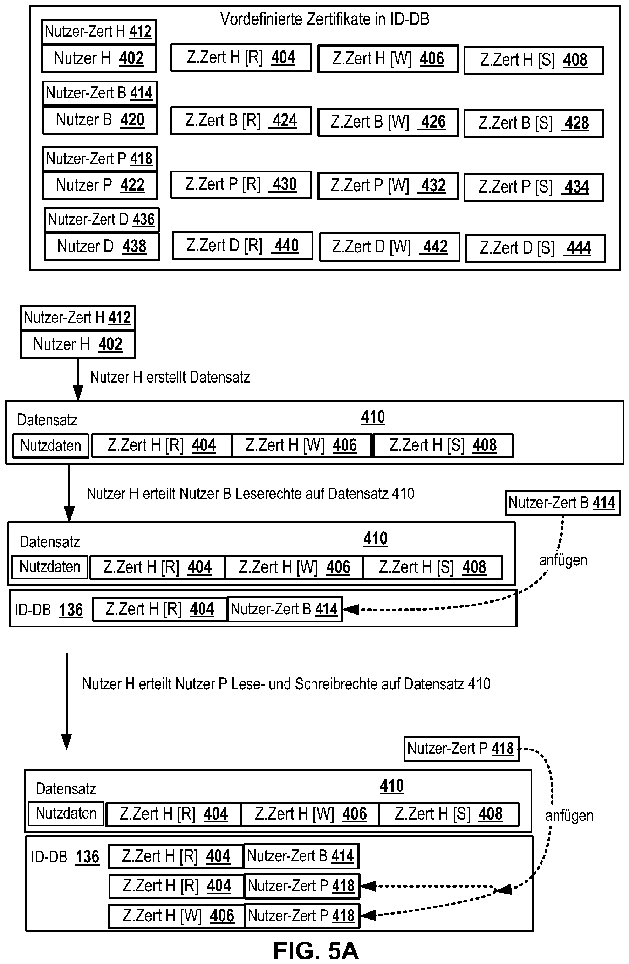

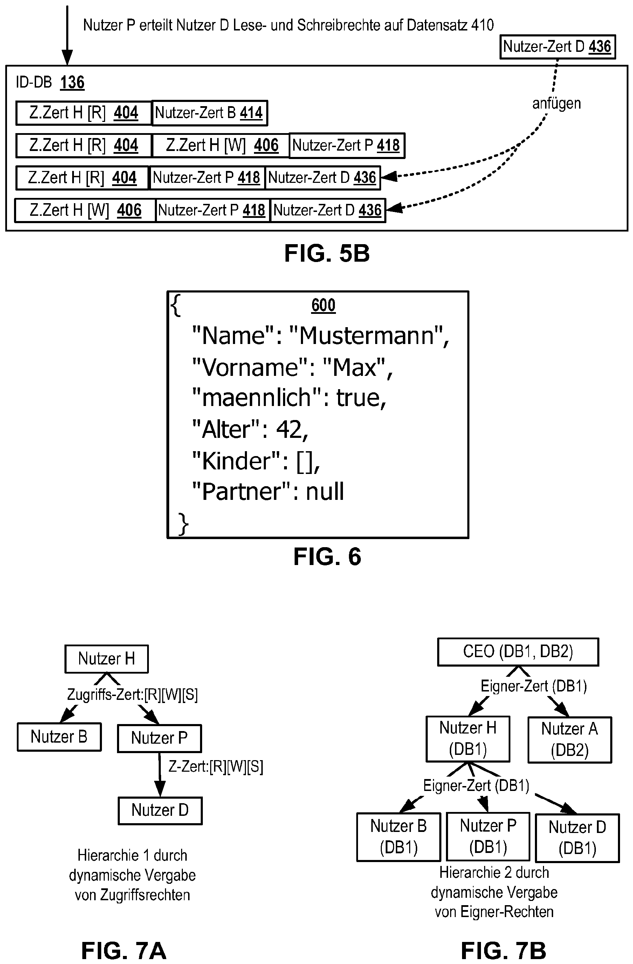

Figur 5 zeigt beispielhaft für 4 Nutzer 402, 420, 422, 438, welche Zugriffs-Zertifikate und Nutzer-Zertifikate diesen Nutzern in einer ID-Datenbank eines Quell-Zugriffsverwaltungssystems jeweils zugewiesen sein können. Beispielsweise ist dem Nutzer 402 ein Nutzer-Zertifikat 412 zugewiesen. Außerdem sind dem Nutzer 3 Zugriffs-Zertifikate für unterschiedliche Arten des Zugriffs auf die von ihm erstellten Datensätze zugewiesen, nämlich das Zugriffs-Zertifikat 404 für den Lesezugriff, das Zugriffs-Zertifikat 406 für den Schreibzugriff sowie das Zugriffs-Zertifikat 408 für den Zugriff auf einen oder mehrere Indices einer Quelldatenbank um zu erfahren, ob und wie viele Datensätze dieser Nutzer in der Quelldatenbank erstellt hat. In analoger Weise sind auch den anderen Nutzern 420, 422, 438 entsprechende Nutzer-Zertifikate und Zugriffs-Zertifikate zugewiesen.

Figur 5 illustriert zudem eine mögliche Sequenz der Übertragung von Zugriffs-Rechten über eine Kette mehrerer Nutzer.

In einem ersten Schritt erstellt der Nutzer 402 in einer Quelldatenbank DB1 einen Datensatz 410. Im Zuge der Erstellung werden neben den eigentlichen Nutzdaten, wie zum Beispiel in Figur 6 abgebildet, automatisch im Hintergrund auch die 3 Zugriffs-Zertifikate 404, 406, und 408, die dem erstellenden Nutzer 402 zugewiesen sind, in entsprechenden Feldern des Datensatzes gespeichert.

In einem nächsten Schritt überträgt der Ersteller 402 mithilfe einer GUI einem anderen Nutzer 420 Leserechte für den Datensatz 410 (sowie auf sämtliche anderen Datensätze, die der Nutzer 402 mit diesem speziellen Lesezugriffs-Zertifikat 404 erstellt hat). Dies bedeutet, dass das Zugriffsverwaltungssystem in der ID-Datenbank dem Nutzer dieses spezielle Lesezugriffs-Zertifikat 404 zuweist, zum Beispiel in dem dieses Zertifikat 404 mit dem Nutzer-Zertifikat 414 des Nutzers 420 verknüpft gespeichert wird, zum Beispiel innerhalb des gleichen Zugriffsermächtigungskettenobjekts.

Der Ersteller des Datensatzes 410 kann auch einem anderen Nutzer Zugriffsrechte einräumen. So räumt der Nutzer 402 beispielsweise im nächsten Schritt einem anderen Nutzer 422 Lese-und Schreibrechte für sämtliche von dem Nutzer 402 erstellten Datensätze, die die Zertifikate 404 und 406 beinhalten, ein. Die ID-Datenbank bzw. die Ermächtigungskettenobjekte werden um ein neues Zugriffsermächtigungskettenobjekt erweitert, welches spezifiziert, dass der Nutzer 402 dem Nutzer 422 die Zugriffs-Zertifikate 404 und 406 zugewiesen hat. In dem neu generierten Zugriffsermächtigungskettenobjekt kann eine Kopie des oder der zugewiesenen Zugriffs-Zertifikate gespeichert sein, die zumindest im Hinblick auf den Wert eines Delegierbarkeitsparameters von dem ursprünglichen Zugriffs-Zertifikat abweicht. Dadurch kann jeder Nutzer der Kette kontrollieren, ob ein anderer Nutzer, dem er bestimmte Rechte einräumt, diese weitergeben kann oder nicht. In dem in Figur 5 dargestellten Beispiel wurden dem Nutzer 422 die Zugriffsrechte 404 und 406 in delegierbarer Form zugewiesen. Der Nutzer 418 kann diese Rechte also an andere weitergeben, was im nächsten Schritt illustriert ist: Der Nutzer 422 weist die ihm zugewiesenen Zugriffs-Rechte 404 und 406 nunmehr auch an den Nutzer 438 zu. Diese Zuweisung bewirkt eine Erstellung eines neuen Zugriffsermächtigungskettenobjekts in der ID-Datenbank, in welchem die Kette durch Anfügen eines weiteren Nutzer-Zertifikats 436 des Nutzers, dem die Rechte zugewiesen wurden, um ein Glied erweitert wird.

Die in den Ermächtigungskettenobjekten dokumentierte Kette an Nutzer-Zertifikaten dokumentiert die Übertragung von Eigner-oder Zugriffs-Rechten über eine Sequenz mehrerer Nutzer. Die Sequenz kann aus einer bloßen Aneinanderreihung von Nutzer-Zertifikaten bestehen, wobei beispielsweise die Position der Nutzer-Zertifikate innerhalb der Kettenobjekte die zeitliche Reihe der Übertragungen repräsentiert. Optional kann nach manchen Ausführungsformen die Kette von Nutzer-Zertifikaten innerhalb eines Ermächtigungskettenobjekten dadurch generiert werden, dass die ID-Datenbank die den einzelnen Nutzer-Zertifikaten zugeordneten privaten Schlüssel so verwendet, dass das letzte Nutzer-Zertifikat in der Kette das an dieses neuangefügte neue Nutzer-Zertifikat signiert, sodass auch innerhalb der Kette der Nutzer-Zertifikate der einzelnen Ermächtigungskettenobjekte eine Zertifikatskettenprüfung möglich ist.

**Figur 6** zeigt ein Beispiel für Nutzdaten 600, die Bestandteil eines Datensatzes 106, 108 sein können. Die Nutzdaten sind im JSon Format spezifiziert. Es können jedoch auch beliebige andere Datenformate verwendet werden.

**Figur 7** zeigt zwei dynamisch und unabhängig voneinander durch mehrere Nutzer über eine Schnittstelle des Quell-Zugriffsverwaltungssystems generierte Hierarchien, entlang welcher Zugriffsrechte und/oder Eignerrechte über eine Kaskade von Nutzern weitergegeben wurden.

So repräsentiert die in **Figur 7A** abgebildete Hierarchie eine Kaskade von Zugriffsrechten auf ein oder mehrere von Nutzer H erstellte Datensätze. Das Zugriffs-Recht umfasst z.B. drei Zugriffsarten Lesen [R], Schreiben [W] und Indexzugriff [S] und kann mittels einem kombinierten oder drei unterschiedlichen Zugriffs-Zertifikaten auf andere Nutzer übertragen werden. Im vorliegenden Fall hat der Nutzer H, der einen Datensatz erstellte und mit den besagten Zugriffsrechten (in der Nutzdaten-Datenbank) verknüpfte, die Zugriffrechte über drei Zugriffs-Zertifikate an die Nutzer B und P weitergegeben, wobei Nutzer P diese Zugriffsrechte auf die von H erstellten Datensätze wiederum an den Nutzer D weitergab. Somit bezieht Nutzer D seine Zugriffsrechte auf die Daten von H über den Mittelsmann "P".

Die in **Figur 7B** abgebildete Hierarchie bildet eine Kaskade von Eigner-Rechten auf ein oder mehrere Nutzdaten-Datenbanken DB1, DB2 ab. Der Geschäftsführer CEO hat z.B. Eigner-Zertifikate sowohl für Datenbank DB1 als auch DB2. Er überträgt diese Eigner-Rechte über eine Schnittstelle des Zugriffsverwaltungssystems derart, dass Nutzer H ein Eigner-Zertifikat für die Datenbank DB1 und Nutzer A ein Eigner-Zertifikat für Datenbank DB2 zugewiesen wird. Nutzer H wiederum überträgt Eignerschafts-Rechte für die Datenbank DB1 an die Nutzer B, P und D. Jedem Nutzer, der ein Eigner-Zertifikat für z.B. DB1 zugewiesen bekommt, ist damit ermächtigt, eine Datenbankverbindung zu der entsprechenden Nutzdaten-Datenbank aufzubauen und in dieser eigene Datensätze anzulegen. Im vorliegenden Fall hat der Nutzer D Eignerschaftsrechte für die Datenbank DB1 über den Nutzer H vom CEO erhalten. Die Weitergabe von Zugriffsrechten über Zugriffs-Zertifikate wie in 7A dargestellt und die Weitergabe von Eigner-Rechten über Eigner-Zertifikate wie in 7B dargestellt erfolgen entlang einer dynamisch zwischen Nutzern definierten Kette des Vertrauens und vorzugsweise unabhängig von einer vorgegebenen Hierarchie. Ein in der Unternehmenshierarchie in der Mitte angesiedelter Nutzer kann also sowohl seinem Vorgesetzten als auch seinen Untergebenen Zugriffsrechte und/oder Eigner-Rechte einräumen.

**Figur 8** zeigt ein Flussdiagramm eines Verfahrens zum Export von Datensätzen aus einer Datenbank nach einer der Ausführungsformen der Erfindung. Das Verfahren kann z.B. in einem Quell-Zugriffsverwaltungssystem, das als Quell-DBMS ausgebildet sein kann, implementiert sein, wie es in verschiedenen Ausführungsformen etwa in Figuren 1, 2 und 9 beschrieben ist. Das Verfahren wird daher im Folgenden unter Bezugnahme auf Elemente, die in Figuren 1, 2 und 9 dargestellt sind, beschrieben.

Das Quell-Zugriffsverwaltungssystem 940 kann z.B. als Quell-DBMS ausgebildet sein. Es kann auf einem Datenverarbeitungssystem 946, z.B. einem Computer, der als "Quell-Rechner" bezeichnet wird, installiert und instanziiert sein. Das Quell-Zugriffsverwaltungssystem beinhaltet ein Register 962, welches Daten von Nutzern beinhaltet, die sich bei dem Quell-Zugriffsverwaltungssystem registriert haben. Die registrierten Nutzer U1, U2, U3, U4, U11 können Datenbanknutzer sein. Das Quell-Zugriffsverwaltungssystem beinhaltet eine ID-Datenbank 136, in welchem Nutzerzertifikate gespeichert sind und die ein oder mehreren Eigner-Zertifikaten und/oder Zugriffszertifikaten zugeordnet sind. Es beinhaltet ferner ein oder mehrere Quelldatenbanken 102 sowie ein kryptographisches Modul 954 und eine Schnittstelle 952 zum Export und optional auch Import von Datensätzen 106, 108, 110, 112, 114, 116 aus bzw. in die Quelldatenbank 102.

In einem ersten Schritt 920 empfängt das Quell-Zugriffsverwaltungssystem einen Exportbefehl zum Export von Datensätzen der Quelldatenbank 102. Beispielsweise kann der Exportbefehl von dem registrierten Datenbanknutzer U1 über eine GUI des Quell-DBMS oder eines mit dem Quell-DBMS interoperablen Applikationsprograms oder Plugins, das hier als funktionaler Bestandteil des DBMS angesehen wird, empfangen werden. Nach manchen Ausführungsformen erlaubt es die GUI dem Nutzer, einzelne Datensätze, die exportiert werden sollen, auszuwählen. Wie zuvor bereits beschrieben wurde ist das Quell-Zugriffsverwaltungssystem so konfiguriert ist, dass es dem Nutzer U1 und anderen beim Quell-DBMS registrierten Nutzern Zugriffsrechte auf den Inhalt der Datensätzen in Form von ein oder mehreren Zugriffsberechtigungsnachweisen (z.B. Zugriffsberechtigungs-Zertifikate in Form von Zahlenwerten). Die Datensätze auf die zugegriffen werden soll beinhalten Kopien von einigen dieser Zugriffsberechtigungsnachweise, z.B. diejenigen, die dem Ersteller des jeweiligen Datensatzes zugewiesen sind. Das Quell-Zugriffsmanagementsystem ist außerdem dazu konfiguriert, selektiv nur denjenigen der ersten Nutzer Zugriff auf den Inhalt eines der Datensätze zu ermöglichen, welchen ein Zugriffsberechtigungsnachweis zugeordnet ist, der in diesem Datensatz enthalten ist. Die Kontrolle über den Zugriff auf den Datensatz kann von einer Programmlogik der speziellen Quelldatenbank 102 implementiert sein, wohingegen ein ID-Management Modul 702, das Bestandteil des Quell-DBMS ist und/oder eine an die ID-Datenbank des Quell-DBMS gekoppelte Programmlogik ist, die Zuordnung von Nutzer-Zertifikaten und Eigner- und/oder Zugriffs-Zertifikaten überwacht und kontrolliert. In der ID-Datenbank 136 sind dem Nutzer U1 bezüglich der Quelldatenbank 102 Eigner-Rechte (z.B. in Form eines Eigner-Zertifikats) zugewiesen. Dieses Eigner-Recht erlaubt es einem Nutzer, dem es zugeordnet ist, die Quelldatenbank ganz oder teilweise zu exportieren, es räumt diesem Nutzer jedoch keine Zugriffsrecht auf den Inhalt der Datensätze der Quelldatenbank ein. Hierzu müssten dem ersten Nutzer in der ID-Datenbank noch zusätzliche Rechte (Zugriffsrechte) bezüglich dieser Datensätze zugewiesen sein.

In einem weiteren Schritt 922 prüft das Quell-Zugriffsverwaltungssystem in Antwort auf den Empfang des Exportbefehls, ob dem Nutzer U1, von welchem der Exportbefehl empfangen wurde, ein Eigner-Recht bezüglich der Quelldatenbank 102 zugewiesen ist. Hierzu greift es auf den Inhalt der ID-Datenbank zu, zum Beispiel Eignerschaftsermächtigungskettenobjekte 139. Nur dann, wenn die Prüfung ergibt, dass dem Nutzer von dem der Exportbefehl empfangen wurde, das Eigner-Recht bezüglich der Quelldatenbank zugewiesen ist, exportiert das Quell-Zugriffsmanagementsystem in Schritt 924 alle oder ausgewählte Datensätze der Quelldatenbank über die Schnittstelle 952. Im Zuge des Exports ermittelt das Quell-Zugriffsverwaltungssystem automatisch einen öffentlichen kryptographischen Schlüssel, der von einer Zertifizierungsstelle 140 spezifisch für die Person, die den Nutzer U1 repräsentiert der den Export veranlasst hat, ausgestellt wurde, und verwendet diesen Schlüssel, um die zu exportierenden Datensätze durch das kryptographische Modul 954 zu verschlüsseln.

Der zugehörige nutzerspezifische private Entschlüsselungsschlüssel ist vorzugsweise sicher in einem oder mehreren Ziel-Zugriffsverwaltungssystem 942 gespeichert, in welches die exportierten verschlüsselten Datensätze später importiert werden sollen. Der private Schlüssel ist so gespeichert dass die Person, die sich als Nutzer N1 beim System 940 registriert hat, und auch jede andere Person außerhalb eines Zugriffsverwaltungssystems 942, 940, das im Hinblick auf Datensatzzugriffsrechte so konfiguriert ist wie für System 940 beschrieben, nicht auf den privaten Schlüssel zugreifen und die exportierten Daten entschlüsseln kann. Das heißt, der einzige Weg für die Person, die die Datensätze exportiert hat, auf den Inhalt eines dieser exportierten Datensatzes zuzugreifen, ist es, die verschlüsselten Datensätze in eine Datenbank 944 zu importieren, wo diese Person ebenfalls als Nutzer (z.B. Datenbanknutzer) registriert ist und das den privaten Schlüssel dieser Person gespeichert hat und das diesem Nutzer über eine ID-Datenbank 966 Zugriffsrechte zuweist.

Beispielsweise kann ein Ziel-Zugriffsverwaltungssystem 942 auf einem anderen Computer 948 installiert sein, das mit dem Computer des Quell-Zugriffsverwaltungssystems über ein Netzwerk, z.B. das Internet, verbunden ist. Beim Ziel-Zugriffsverwaltungssystem 942, das als Ziel-DBMS ausgebildet sein kann, sind mehrere Personen als "zweite" Nutzer registriert, darunter auch die gleiche Person, die im Quellsystem den Export veranlasst hat. Auch wenn Nutzernamen einer Person bei Quell- und Zieldatenbank unterschiedlich sein können, besteht vorzugsweise zumindest dahingehend ein Zusammenhang, dass das ZielSystem den privaten Entschlüsselungsschlüssel sicher gespeichert hat der zu dem öffentlichen Verschlüsselungsschlüssel und zugehörigem Zertifikat gehört, das von der Zertifizierungsstelle ausgestellt und zur Verschlüsselung der Datensätze beim Export verwendet wurde. Der Nutzername kann aber auch übereinstimmen. In Figur 9 ist die Person, die den Export veranlasste, als Nutzer "U1" sowohl beim Quell- als auch beim Ziel-Zugriffsverwaltungssystem registriert.

Nachdem sich die Person, die den Export vorgenommen hat, als "zweiter Nutzer U1" beim Ziel-Zugriffsverwaltungssystem authentifiziert hat, kann diese Person, z.B. ein Administrator, den Import der exportierten, verschlüsselten Datensätze über die Schnittstelle 958 zum Beispiel über eine GUI des Ziel-Zugriffsverwaltungssystems initiieren. Das kryptographische Modul 956 ermittelt den privaten Schlüssel, der dem Nutzer, der den Importbefehl gegeben hat in der ID-Datenbank 966 zugeordnet ist, und verwendet diesen zur Entschlüsselung der Datensätze um diese in entschlüsselter Form in der Zieldatenbank 944 zu speichern. Obwohl die importierten Daten also nach dem Import in entschlüsselter Form in der Datenbank 944 vorliegen, kann der Nutzer, der sie importiert hat, nur dann auf diese zugreifen, wenn die ID-Datenbank 966 des Ziel-Zugriffsverwaltungssystems ihm explizit Zugriffsrechte in Form von Zugriffsberechtigungsnachweisen zuweist, die in Kopie auch in den importierten Datensätzen enthalten sind. Somit kann eine Datenbankmigration durchgeführt werden, ohne dass ein Admin auf den Inhalt der migrierten Datensätze zugreifen kann. Außerdem ist es möglich, dass die Zugriffsrechte in Quell- und Zielsystem leicht unterschiedlich sind, und diese Unterschiede trotz der Durchführung einer Datenbankmigration aufrechterhalten werden können, da die Zugriffsrechtsverwaltung (ID-Datenbanken) und die Nutzdaten (Quell- bzw. Zieldatenbanken) getrennt voneinander erfolgen, aber lose durch die Integration von Zugriffsberechtigungsnachweisen in die Datensätze aneinander gekoppelt sind.

### Bezugszeichenliste

- 100: Quell-Zugriffsverwaltungssystem
- 102: Quelldatenbank DB1
- 104: Quelldatenbank DB2
- 105: öffentlicher Signaturprüfschlüssel
- 106: Datensatz
- 107: privater Signierschlüssel
- 108: Datensatz
- 110: Datensatz
- 111: Signatur
- 112: Datensatz
- 113: Signatur
- 114: Datensatz
- 115: Signatur
- 116: Datensatz
- 118: Delegierungs-Parameter
- 122: Berechtigungsnachweis
- 123: Modul zur Zertifikatskettenprüfung
- 124: Nutzer-Zertifikat
- 125: Log
- 126: Nutzer
- 128: Eigner-Zertifikat für Datenbank DB1
- 132: Nutzer-Zertifikat
- 134: Nutzer-Zertifikat
- 136: ID-Datenbank
- 137: Zugriffs-und Eignerschafts-Ermächtigungskettenobjekte
- 138: Zertifikatskette
- 139: Eignerschaftsermächtigungskettenobjekt
- 140: Zertifizierungsstelle
- 141: Eignerschaftsermächtigungskettenobjekt
- 142: Schnittstelle
- 143: Zugriffsermächtigungskettenobjekt
- 144: Schnittstelle
- 150: Attribut-Zertifikat
- 152: Schnittstelle
- 202: Nutzer/Datenbank Nutzer
- 204: Nutzer-Zertifikate
- 206: Eigner-Rechtnachweis für best. Nutzer und DB
- 208: Signatur eines privaten Schlüssels einer Zertifizierungsstelle
- 210: öffentlicher Signaturprüfschlüssel einer Zertifizierungsstelle
- 212: privater Signaturschlüssel der Zertifizierungsstelle
- 214: Trust-Center
- 216: IDs von Quelldatenbanken
- 220: Berechtigungsnachweis für Nutzer U2
- 222: Berechtigungsnachweis für Nutzer U3
- 225: Zugriffs-Berechtigungsnachweis für best. Nutzer und Datensatz
- 226: Zugriffs-Berechtigungsnachweis für best. Nutzer und Datensatz
- 227: Eigner-Recht-Nachweis für best. Nutzer und DB
- 228: Fehlen des [S] Zugriffsrechts für Nutzer U2 bzgl. Daten, die von Nutzer U1 erstellt wurden
- 229: Fehlen des [W] Zugriffsrechts für Nutzer U3 bzgl. Daten, die von Nutzer U1 erstellt wurden
- 230: Fehlen des [R] Zugriffsrechts für Nutzer U3 bzgl. Daten, die von Nutzer U1 erstellt wurden
- 232: [W] und [R] Zugriffsrechte des Nutzers U2 auf Daten, die von Nutzer U1 erstellt wurden
- 234: Zugriffsrechte des Nutzers U3 auf Daten, die von Nutzer U1 und U2 erstellt wurden
- 236: Signatur von Berechtigungsnachweis 225
- 237: Signatur von Berechtigungsnachweis 206
- 238: Signatur von Berechtigungsnachweis 226
- 239: Signatur von Berechtigungsnachweis 227
- 240: Signatur von Berechtigungsnachweis 242
- 242: Zugriffs-Berechtigungsnachweis für best. Nutzer und Datensatz
- 302: Geschäftsführer
- 304: Bereichsleiter Finanzen
- 308: Leitung IT-Sicherheit
- 310: Leitung IT-Infrastruktur
- 312: Leitung IT-Applikation Entwicklung
- 314: Administrator
- 316: Administrator
- 318: Administrator
- 402: Nutzer H
- 404-408: Zugriffs-Zertifikate für von H erstellte Daten
- 410: Datensatz
- 412: Nutzer-Zertifikat für Nutzer H
- 420: Nutzer B
- 424-428: Zugriffs-Zertifikate für von B erstellte Daten
- 414: Nutzer-Zertifikat für Nutzer B
- 422: Nutzer P
- 430-434: Zugriffs-Zertifikate für von P erstellte Daten
- 418: Nutzer-Zertifikat für Nutzer P
- 436: Nutzer D
- 440-444: Zugriffs-Zertifikate für von D erstellte Daten
- 438: Nutzer-Zertifikat für Nutzer D
- 600: Nutzdaten
- 702: ID-Management-Modul
- 900: verteiltes Computersystem
- 920-924: Schritte
- 940: Quell-DBMS
- 942: Ziel-DBMS
- 944: Zieldatenbank
- 946: Computersystem
- 948: Computersystem
- 954: kryptographisches Modul Quell-DBMS
- 956: kryptographisches Modul Ziel-DBMS
- 960: verschlüsselte Datensätze
- 962: Nutzerregister des Quell-DBMS
- 964: Nutzerregister des Ziel-DBMS
- 966: ID-Datenbank

## Patentansprüche

1. Verfahren zum Export von Datensätzen (106, 108, 110, 112, 114, 116) aus einer Quelldatenbank (102, 104), umfassend:
- Empfangen (920) eines Exportbefehls durch ein Quell-Zugriffsverwaltungssystem (940) zum Export von Datensätzen der Quelldatenbank (102), wobei bei dem Quell-Zugriffsverwaltungssystem mehrere erste Nutzer (U1, U2, U3, U4, U11) registriert sind, wobei der Exportbefehl von einem der ersten Nutzer empfangen wird, wobei das Quell-Zugriffsverwaltungssystem so konfiguriert ist, dass es
∘ mehreren der ersten Nutzer Zugriffsrechte auf den Inhalt der Datensätzen (106, 108, 110, 112, 114, 116) in Form von ein oder mehreren Zugriffsberechtigungsnachweisen zuweist, wobei die in der Quelldatenbank gespeicherten Datensätze jeweils zumindest einen Zugriffsberechtigungsnachweis beinhalten,
∘ selektiv nur denjenigen der ersten Nutzer Zugriff auf den Inhalt eines der Datensätze ermöglicht, welchen ein Zugriffsberechtigungsnachweis zugeordnet ist, der in diesem Datensatz enthalten ist;
∘ zumindest einem der ersten Nutzer ein Eigner-Recht bezüglich der Quelldatenbank zuweist, wobei das Eigner-Recht einem ersten Nutzer erlaubt, die Quelldatenbank ganz oder teilweise zu exportieren, dem einen ersten Nutzer jedoch kein Zugriffsrecht auf den Inhalt der Datensätze der Quelldatenbank einräumt;
- als Antwort auf den Empfang des Exportbefehls, Prüfen (922), durch das Quell-Zugriffsverwaltungssystem, ob dem ersten Nutzer, von welchem der Exportbefehl empfangen wurde, ein Eigner-Recht bezüglich der Quelldatenbank zugewiesen ist;
- nur dann, wenn die Prüfung ergibt, dass dem Nutzer von dem der Exportbefehl empfangen wurde, das Eigner-Recht bezüglich der Quelldatenbank zugewiesen ist, Exportieren (924) der Datensätze der Quelldatenbank in verschlüsselter Form (960) durch das Quell-Zugriffsverwaltungssystem, wobei diesem Nutzer zumindest für einige der exportierten Datensätze der Quelldatenbank keine Zugriffsrechte zugewiesen sind.

2. Verfahren zum Export von Datensätzen nach Anspruch 1, wobei das Quell-Zugriffsverwaltungssystem für jeden der ersten Nutzer einen öffentlichen kryptographischen Schlüssel gespeichert vorhält, der dem jeweiligen ersten Nutzer in Form eines Nutzer-Zertifikats zugeordnet ist, wobei das Nutzer-Zertifikat von einer Zertifizierungsstelle (140) stammt, wobei das Exportieren der Datensätze der Quelldatenbank in verschlüsselter Form umfasst:
- als Antwort auf den Empfang des Exportbefehls, Identifizieren, durch das Quell-Zugriffsverwaltungssystem, des Nutzer-Zertifikats des Nutzers, von welchem der Exportbefehl empfangen wurde;
- Verschlüsselung der zu exportierenden Datensätze mit dem öffentlichen kryptographischen Schlüssel des identifizierten Nutzer-Zertifikats.

3. Verfahren zum Export von Datensätzen nach einem der Ansprüche,
- wobei das Quell-Zugriffsverwaltungssystem eine erste ID-Datenbank beinhaltet, in welchem jeder der ersten Nutzer mit zumindest einem Nutzer-Zertifikat, ein oder mehreren Zugriffsberechtigungsnachweisen und optional ein oder mehreren Eigner-Zertifikaten, die Eigner-Rechte bezüglich einer vom Quell-Zugriffsverwaltungssystem verwalteten Quelldatenbank beinhalten, verknüpft gespeichert ist, wobei eine verknüpfte Speicherung eines Nutzer-Zertifikats und eines Zugriffsberechtigungsnachweises in der ersten ID-Datenbank dem ersten Nutzer, dem das Nutzer-Zertifikat zugeordnet ist, den Zugriff auf Datensätze der Quelldatenbank erlaubt, welche eine Kopie dieses Zugriffsberechtigungsnachweises beinhalten.

4. Verfahren zur Migration von Daten aus der Quelldatenbank (102) in eine Zieldatenbank (944), umfassend:
- Durchführen des Exports von Daten nach einem der Verfahren zum Datenexport gemäß einem der vorigen Ansprüche;
- Empfangen eines Importbefehls durch ein Ziel-Zugriffsverwaltungssystem (942) zum Import der aus der Quelldatenbank (102) exportierten Datensätze, wobei bei dem Ziel-Zugriffsverwaltungssystem mehrere zweite Nutzer (U1, U9, U23, U47) registriert sind, wobei das Ziel-Zugriffsverwaltungssystem so konfiguriert ist, dass es
∘ einem oder mehreren der zweiten Nutzer Zugriffsrechte auf den Inhalt von Datensätzen in Form von ein oder mehreren Zugriffsberechtigungsnachweisen zuweist,
∘ selektiv nur denjenigen der zweiten Nutzer Zugriff auf den Inhalt eines der durch das Ziel-Zugriffsverwaltungssystem verwalteten Datensätze ermöglicht, welchen ein Zugriffsberechtigungsnachweis zugeordnet ist, der in diesem Datensatz enthalten ist;
∘ zumindest einem der zweiten Nutzer ein Eigner-Recht bezüglich der Zieldatenbank zuweist, wobei das Eigner-Recht einem Nutzer erlaubt, neue Datensätze in der Zieldatenbank durch Import der aus der Quelldatenbank exportierten Datensätze zu erstellen, dem einen Nutzer jedoch kein Zugriffsrecht auf den Inhalt der Datensätze der Zieldatenbank einräumt;
- als Antwort auf den Empfang des Importbefehls, Prüfen, durch das Ziel-Zugriffsverwaltungssystem, ob dem Nutzer, von welchem der Importbefehl empfangen wurde, ein Eigner-Recht bezüglich der Zieldatenbank zugewiesen ist;
- nur dann, wenn die Prüfung ergibt, dass dem Nutzer, von dem der Importbefehl empfangen wurde, das Eigner-Recht bezüglich der Zieldatenbank zugewiesen ist, Importieren und entschlüsseln der verschlüsselten, von der Quelldatenbank exportierten Datensätze durch das Ziel-Zugriffsverwaltungssystem, wobei diesem Nutzer zumindest für einige der zu importierenden Datensätze keine Zugriffsrechte zugewiesen sind.

5. Verfahren zur Migration von Daten nach Anspruch 4, wobei das Ziel-Zugriffsverwaltungssystem einen privaten Schlüssel geschützt gespeichert vorhält, der zusammen mit dem öffentlichen Schlüssel des ersten Nutzers von dem der Exportbefehl stammt ein asymmetrisches kryptographisches Schlüsselpaar bildet, wobei die geschützte Speicherung des privaten Schlüssels beinhaltet, dass der private Schlüssel ausschließlich über eine von dem Ziel-Zugriffsverwaltungssystem bereitgestellte Schnittstelle zur Entschlüsselung der von der Quelldatenbank exportierten Datensätze verwendet werden kann.

6. Verfahren zur Migration von Daten nach Anspruch 4 oder 5, wobei das Ziel-Zugriffsverwaltungssystem für jeden der zweiten Nutzer einen privaten Schlüssel geschützt gespeichert vorhält, wobei der private Schlüssel mit einem öffentlichen Schlüssel, der dem jeweiligen zweiten Nutzer in Form eines Nutzer-Zertifikats zugeordnet ist, ein asymmetrisches kryptographisches Schlüsselpaar bildet, wobei das Nutzer-Zertifikat von der Zertifizierungsstelle (140) stammt, wobei das Entschlüsseln der importierten Datensätze umfasst:
- als Antwort auf den Empfang des Importbefehls, Identifizieren, durch das Ziel-Zugriffsverwaltungssystem, des privaten kryptographischen Schlüssels, das dem Nutzer, von welchem der Importbefehl empfangen wurde, zugewiesen ist;
- Entschlüsselung der zu importierenden Datensätze mit dem identifizierten privaten Schlüssel.

7. Verfahren zur Migration von Daten nach einem der Ansprüche 4-6,
- wobei das Ziel-Zugriffsverwaltungssystem eine zweite ID-Datenbank (966) beinhaltet, in welchem jeder der zweiten Nutzer mit zumindest einem Nutzer-Zertifikat, ein oder mehreren Zugriffsberechtigungsnachweisen und optional ein oder mehreren Eigner-Zertifikaten, die Eigner-Rechte bezüglich einer vom Ziel-Zugriffsverwaltungssystem verwalteten Zieldatenbank beinhalten, verknüpft gespeichert ist, wobei eine verknüpfte Speicherung eines Nutzer-Zertifikats und eines Zugriffsberechtigungsnachweises in der zweiten ID-Datenbank dem zweiten Nutzer, dem das Nutzer-Zertifikat zugeordnet ist, den Zugriff auf Datensätze der Zieldatenbank erlaubt, welche eine Kopie dieses Zugriffsberechtigungsnachweises beinhalten; und
- wobei zumindest einem der ersten Nutzer und einem der zweiten Nutzer das gleiche, von der Zertifizierungsstelle ausgestellte Nutzer-Zertifikat zugewiesen ist.

8. Verfahren zur Migration von Daten nach einem der Ansprüche 4-7, wobei das Ziel-Zugriffsverwaltungssystem für jeden der zweiten Nutzer einen privaten kryptographischen Schlüssel gespeichert vorhält, der dem jeweiligen zweiten Nutzer zugeordnet ist, wobei das Importieren der Datensätze in die Zieldatenbank umfasst:
- als Antwort auf den Empfang des Importbefehlt, Identifizieren, durch das Ziel-Zugriffsverwaltungssystem, des privaten kryptographischen Schlüssels desjenigen der zweiten Nutzer, von welchem der Importbefehlt stammt;
- Entschlüsselung der zu importierenden Datensätze mit dem identifizierten privaten kryptographischen Schlüssel.

9. Verfahren nach einem der Ansprüche 4-8, ferner umfassend:
- Empfangen einer ersten Zugriffsanfrage durch das Quell-Zugriffsverwaltungssystem von dem ersten Nutzer, wobei die Zugriffsanfrage sich auf einen Datensatz bezieht, der von einem anderen ersten Nutzer in der Quelldatenbank erstellt wurde, wobei dieser Datensatz eine Zugriffsberechtigungsnachweis des anderen ersten Nutzers beinhaltet;
- Prüfen, durch das Quell-Zugriffsverwaltungssystem, ob dem einen ersten Nutzer, von dem die erste Zugriffs-Anfrage stammt, in einer ersten ID-Datenbank, die von dem Quell-Zugriffsverwaltungssystem verwaltet wird, eine Kopie dieses Zugriffsberechtigungsnachweises mit dem Nutzer-Zertifikat des ersten Nutzers, von dem die Zugriffsanfrage stammt, verknüpft gespeichert ist;
- Gewährung des Zugriffs auf den Datensatz des anderen ersten Nutzers an den ersten Nutzer, von dem die erste Zugriffsanfrage stammt, nur dann, wenn das Quell-Zugriffsverwaltungssystem feststellt, dass die Kopie mit dem Nutzer-Zertifikat verknüpft gespeichert ist, wobei der Zugriff nur im Rahmen der in dem Zugriffsberechtigungsnachweis spezifizierten Art des Zugriffs gewährt wird.

10. Verfahren nach einem der Ansprüche 4-9, ferner umfassend:
- Nach dem Import der exportierten Datensätze in die Zieldatenbank, Empfangen einer zweiten Zugriffsanfrage durch das Ziel-Zugriffsverwaltungssystem von einem der zweiten Nutzer, wobei die zweite Zugriffsanfrage sich auf einen der importierten Datensätze bezieht, der von einem ersten Nutzer in der Quelldatenbank erstellt wurde, der eine Person repräsentiert, die als ein anderer zweiten Nutzer beim Ziel-Zugriffsverwaltungssystem registriert ist, wobei dieser Datensatz zumindest einen Zugriffsberechtigungsnachweis des anderen zweiten Nutzers beinhaltet;
- Prüfen, durch das Ziel-Zugriffsverwaltungssystem, ob dem einen zweiten Nutzer, von dem die zweite Zugriffs-Anfrage stammt, in einer zweiten ID-Datenbank, die von dem Ziel-Zugriffsverwaltungssystem verwaltet wird, eine Kopie dieses Zugriffsberechtigungsnachweises mit dem Nutzer-Zertifikat des zweiten Nutzers, von dem die zweite Zugriffsanfrage stammt, verknüpft gespeichert ist;
- Gewährung des Zugriffs auf den Datensatz des anderen zweiten Nutzers an den zweiten Nutzer, von dem die zweite Zugriffsanfrage stammt, nur dann, wenn das Ziel-Zugriffsverwaltungssystem feststellt, dass die Kopie mit dem Nutzer-Zertifikat verknüpft gespeichert ist, wobei der Zugriff nur im Rahmen der in dem Zugriffsberechtigungsnachweis spezifizierten Art des Zugriffs gewährt wird.

11. Verfahren zum Import von Datensätzen in eine Zieldatenbank, umfassend:
- Empfangen eines Importbefehls durch ein Ziel-Zugriffsverwaltungssystem (942) zum Import der Datensätze, wobei bei dem Ziel-Zugriffsverwaltungssystem mehrere zweite Nutzer (U1, U9, U23, U47) registriert sind, wobei das Ziel-Zugriffsverwaltungssystem so konfiguriert ist, dass es
∘ einem oder mehreren der zweiten Nutzer Zugriffsrechte auf den Inhalt von Datensätzen in Form von ein oder mehreren Zugriffsberechtigungsnachweisen zuweist, wobei die zu importierenden Datensätze jeweils zumindest einen Zugriffsberechtigungsnachweis beinhalten;
∘ selektiv nur denjenigen der zweiten Nutzer Zugriff auf den Inhalt eines der durch das Ziel-Zugriffsverwaltungssystem verwalteten Datensätze ermöglicht, welchen ein Zugriffsberechtigungsnachweis zugeordnet ist, der in diesem Datensatz enthalten ist;
∘ zumindest einem der zweiten Nutzer ein Eigner-Recht bezüglich der Zieldatenbank zuweist, wobei das Eigner-Recht einem Nutzer erlaubt, neue Datensätze in der Zieldatenbank durch Import der aus der Quelldatenbank exportierten Datensätze zu erstellen, dem einen Nutzer jedoch kein Zugriffsrecht auf den Inhalt der Datensätze der Zieldatenbank einräumt;
- als Antwort auf den Empfang des Importbefehls, Prüfen, durch das Ziel-Zugriffsverwaltungssystem, ob dem Nutzer, von welchem der Importbefehl empfangen wurde, ein Eigner-Recht bezüglich der Zieldatenbank zugewiesen ist;
- nur dann, wenn die Prüfung ergibt, dass dem Nutzer, von dem der Importbefehl empfangen wurde, das Eigner-Recht bezüglich der Zieldatenbank zugewiesen ist, Importieren und entschlüsseln der verschlüsselten, von der Quelldatenbank exportierten Datensätze durch das Ziel-Zugriffsverwaltungssystem, wobei diesem Nutzer zumindest für einige der zu importierenden Datensätze keine Zugriffsrechte zugewiesen sind.

12. Verfahren nach einem der vorigen Ansprüche, wobei das Quell-Zugriffsverwaltungssystem ein Quell-DBMS ist und wobei das Ziel- Zugriffsverwaltungssystem ein Ziel-DBMS ist.

13. Computersystem (946) mit einem Quell-Zugriffsverwaltungssystem (940), wobei das Quell-Zugriffsverwaltungssystem umfasst:
- Eine Quelldatenbank (102, 104) mit Datensätzen (106, 108, 110, 112, 114, 116), wobei die Datensätze jeweils zumindest einen Zugriffsberechtigungsnachweis beinhalten;
- Ein Register, in dem mehrere erste Nutzer (U1, U2, U3, U4, U11) registriert und gespeichert sind,
- Eine Schnittstelle (952) zum Empfangen eines Exportbefehls zum Export von Datensätzen der Quelldatenbank, wobei der Exportbefehl von einem der ersten Nutzer empfangen wird,
- wobei das Quell-Zugriffsverwaltungssystem so konfiguriert ist, dass es
∘ mehreren der ersten Nutzer Zugriffsrechte auf den Inhalt der Datensätzen (106, 108, 110, 112, 114, 116) in Form von ein oder mehreren Zugriffsberechtigungsnachweisen zuweist,
∘ selektiv nur denjenigen der ersten Nutzer Zugriff auf den Inhalt eines der Datensätze ermöglicht, welchen ein Zugriffsberechtigungsnachweis zugeordnet ist, der in diesem Datensatz enthalten ist;
∘ zumindest einem der ersten Nutzer ein Eigner-Recht bezüglich der Quelldatenbank zuweist, wobei das Eigner-Recht einem ersten Nutzer erlaubt, die Quelldatenbank ganz oder teilweise zu exportieren, dem einen ersten Nutzer jedoch kein Zugriffsrecht auf den Inhalt der Datensätze der Quelldatenbank einräumt;
∘ als Antwort auf den Empfang des Exportbefehls prüft, ob dem ersten Nutzer, von welchem der Exportbefehl empfangen wurde, ein Eigner-Recht bezüglich der Quelldatenbank zugewiesen ist;
∘ nur dann, wenn die Prüfung ergibt, dass dem Nutzer von dem der Exportbefehl empfangen wurde, das Eigner-Recht bezüglich der Quelldatenbank zugewiesen ist, alle oder ausgewählte Datensätze der Quelldatenbank in verschlüsselter Form (960) exportiert, wobei diesem Nutzer zumindest für einige der exportierten Datensätze der Quelldatenbank keine Zugriffsrechte zugewiesen sind.

14. Computersystem (948) mit einem Ziel-Zugriffsverwaltungssystem (942), wobei das Ziel-Zugriffsverwaltungssystem umfasst:
- Eine Zieldatenbank (944);
- Ein Register, in dem mehrere zweite Nutzer (U1, U9, U23, U47) registriert und gespeichert sind,
- Eine Schnittstelle (958) zum Empfangen eines Importbefehls von einem der zweiten Nutzer zum Import von Datensätzen,
wobei das Ziel-Zugriffsverwaltungssystem so konfiguriert ist, dass es
∘ einem oder mehreren der zweiten Nutzer Zugriffsrechte auf den Inhalt von Datensätzen in Form von ein oder mehreren Zugriffsberechtigungsnachweisen zuweist,
∘ selektiv nur denjenigen der zweiten Nutzer Zugriff auf den Inhalt eines der durch das Ziel-Zugriffsverwaltungssystem verwalteten Datensätze ermöglicht, welchen ein Zugriffsberechtigungsnachweis zugeordnet ist, der in diesem Datensatz enthalten ist;
∘ zumindest einem der zweiten Nutzer ein Eigner-Recht bezüglich der Zieldatenbank zuweist, wobei das Eigner-Recht einem Nutzer erlaubt, neue Datensätze in der Zieldatenbank durch Import der aus der Quelldatenbank exportierten Datensätze zu erstellen, dem einen Nutzer jedoch kein Zugriffsrecht auf den Inhalt der Datensätze der Zieldatenbank einräumt;
- als Antwort auf den Empfang des Importbefehls, Prüfen, durch das Ziel-Zugriffsverwaltungssystem, ob dem zweiten Nutzer, von welchem der Importbefehl empfangen wurde, ein Eigner-Recht bezüglich der Zieldatenbank zugewiesen ist;
- nur dann, wenn die Prüfung ergibt, dass dem zweiten Nutzer, von dem der Importbefehl empfangen wurde, das Eigner-Recht bezüglich der Zieldatenbank zugewiesen ist, Importieren und entschlüsseln der verschlüsselten, von der Quelldatenbank exportierten Datensätze durch das Ziel-Zugriffsverwaltungssystem, wobei die importierten Datensätze jeweils zumindest einen Zugriffsberechtigungsnachweis beinhalten, wobei diesem zweiten Nutzer zumindest für einige der zu importierenden Datensätze keine Zugriffsrechte zugewiesen sind.

15. Verteiltes Computersystem (900) mit einem ersten Computersystem (946) nach Anspruch 13 und einem zweiten Computersystem (948) nach Anspruch 14, wobei das erste und zweite Computersystem über ein Netzwerk verbunden sind und wobei das Quell-Zugriffsverwaltungssystem und das Ziel-Zugriffsverwaltungssystem dazu ausgebildet sind, die exportierten Daten über das Netzwerk in verschlüsselter Form von dem Quell-Zugriffsverwaltungssystem an das Ziel-Zugriffsverwaltungssystem zu übertragen.

## Claims

1. A method for exporting data sets (106, 108, 110, 112, 114, 116) from a source database (102, 104) comprising the steps of:
- receiving (920) an export command by a source access management system (940) to export data sets of the source database (102), wherein a plurality of first users (U1, U2, U3, U4, U11) are registered in the source access management system, wherein the export command is received from one of the first users, wherein the source access management system is configured in such a way that it
∘ assigns to a plurality of the first users access rights to the content of the data sets (106, 108, 110, 112, 114, 116) in the form of one or more proofs of access authorisation, wherein the data sets stored in the source database each contain at least one proof of access authorisation,
∘ selectively enables access to the content of one of the data sets only for those of the first users to whom a proof of access authorization contained in said data set is assigned;
∘ assigns an owner right with respect to the source database to at least one of the first users, wherein the owner right allows a first user to export the source database in whole or in part, however, said first user is not granted an access right to the content of the data sets of the source database;
- as a response to the receipt of the export command, checking (922) by the source access management system whether an owner right with respect to the source database is assigned to the first user from whom the export command was received;
- only if the check confirms that the user from whom the export command was received is assigned an owner right with respect to the source database, exporting (924) the data sets of the source database in encrypted form (960) by the source access management system, wherein said user is not assigned access rights at least for some of the exported data sets of the source database.

2. The method for exporting data sets according to claim 1, wherein the source access management system for each of the first users stores a public cryptographic key which is assigned to a first user in the form of a user certificate, wherein the user certificate originates from a certification authority (140), wherein the exporting of the data sets of the source database in encrypted form comprises the steps of:
- as a response to the receipt of the export command, identifying, by the source access management system, the user certificate of the user from whom the export command was received;
- encrypting the data sets to be exported with the public cryptographic key of the identified user certificate.

3. The method for exporting data sets according to one of the preceding claims,
- wherein the source access management system contains a first ID database, in which each of the first users is stored, linked to at least one user certificate, one or more proofs of access authorisation and optionally one or more owner certificates, which contain owner rights with respect to a source database managed by the source access management system, wherein a linked storage of a user certificate and of a proof of access authorisation in the first ID database allows the first user to whom the user certificate is assigned to access data sets of the source database which contain a copy of this proof of access authorisation.

4. A method for migrating data from the source database (102) into a target database (944), comprising the steps of:
- exporting data in accordance with one of the data export methods according to one of the preceding claims;
- receiving an import command by a target access management system (942) to import the data sets exported from the source database (102), wherein a plurality of second users (U1, U9, U23, U47) are registered in the target access management system, wherein the target access management system is configured such that it
∘ assigns one or more of the second users access rights to the content of data sets in the form of one or more proofs of access authorisation,
∘ selectively enables access to the content of one of the data sets managed by the target access management system only for those of the second users to whom a proof of access authorization contained in said data set is assigned;
∘ assigns an owner right with respect to the target database to at least one of the second users, wherein the owner right allows a user to create new data sets in the target database by importing the data sets exported from the source database, however, said user is not granted an access right to the content of the data sets of the target database;
- as a response to the receipt of the import command, checking by the target access management system whether an owner right with respect to the target database is assigned to the user from whom the import command was received;
- only if the check confirms that the user from whom the import command was received is assigned an owner right with respect to the target database, importing and decrypting the encrypted data sets exported from the source database by the target access management system, wherein said user is not assigned access rights at least for some of the data sets to be imported.

5. The method for migrating data according to claim 4, wherein the target access management system stores a private key in protected form, which private key together with the public key of the first user from whom the export command originates forms an asymmetric cryptographic key pair, wherein the protected storage of the private key includes that the private key may be used exclusively via an interface provided by the target access management system to decrypt the data sets exported from the source database.

6. The method for migrating data according to claim 4 or 5, wherein the target access management system stores a private key in protected form for each of the second users, wherein the private key together with a public key assigned to the second user in the form of a user certificate forms an asymmetric cryptographic key pair, wherein the user certificate originates from the certification authority (140), wherein the decryption of the imported data sets comprises the steps of:
- as a response to the receipt of the import command, identifying, by the target access management system, the private cryptographic key assigned to the user from whom the import command was received;
- decrypting the data sets to be imported with the identified private key.

7. The method for migrating data according to one of claims 4-6,
- wherein the target access management system contains a second ID database (966), in which each of the second users is stored, linked to at least one user certificate, one or more proofs of access authorisation and optionally one or more owner certificates, which contain owner rights with respect to a target database managed by the target access management system, wherein a linked storage of a user certificate and of a proof of access authorisation in the second ID database allows the second user to whom the user certificate is assigned to access data sets of the target database which contain a copy of this proof of access authorisation; and
- wherein the same user certificate issued by the certification authority is assigned to at least one of the first users and one of the second users.

8. The method for migrating data according to one of claims 4-7, wherein the target access management system stores a private cryptographic key for each of the second users, which key is assigned to the second user, wherein the importing of the data sets into the target database comprises the steps of:
- as a response to the receipt of the import command, identifying, by the target access management system, the private cryptographic key of the second user from whom the import command originates;
- decrypting the data sets to be imported with the identified private cryptographic key.

9. The method according to one of claims 4-8, further comprising the steps of:
- receiving a first access request by the source access management system from the first user, wherein the access request relates to a data set that was created by another first user in the source database, wherein this data set contains a proof of access authorisation of the other first user;
- checking, by the source access management system, whether, for the first user from whom the first access request originates, in a first ID database managed by the source access management system there is stored a copy of this proof of access authorisation linked to the user certificate of the first user from whom the access request originates;
- granting access to the data set of the other first user to the first user from whom the first access request originates only if the source access management system determines that the copy is stored linked to the user certificate, wherein the access is granted only within the scope of the type of access specified in the proof of access authorisation.

10. The method according to one of claims 4-9, further comprising the steps of:
- following the import of the exported data sets into the target database, receiving a second access request by the target access management system from one of the second users, wherein the second access request relates to one of the imported data sets that was created by a first user in the source database, representing a person who is registered as another second user in the target access management system, wherein this data set contains at least one proof of access authorisation of the other second user;
- checking, by the target access management system, whether, for the second user from whom the second access request originates, in a second ID database managed by the target access management system there is stored a copy of this proof of access authorisation linked to the user certificate of the second user from whom the second access request originates;
- granting access to the data set of the other second user to the second user from whom the second access request originates only if the target access management system determines that the copy is stored linked to the user certificate, wherein the access is granted only within the scope of the type of access specified in the proof of access authorisation.

11. A method for importing data sets into a target database, comprising the steps of:
- receiving an import command by a target access management system (942) to import the data sets, wherein a plurality of second users (U1, U9, U23, U47) are registered in the target access management system, wherein the target access management system is configured such that it
∘ assigns one or more of the second users access rights to the content of data sets in the form of one or more proofs of access authorisation, wherein the data sets to be imported each contain at least one proof of access authorisation;
∘ selectively enables access to the content of one of the data sets managed by the target access management system only for those of the second users to whom a proof of access authorization contained in said data set is assigned;
∘ assigns an owner right with respect to the target database to at least one of the second users, wherein the owner right allows a user to create new data sets in the target database by importing the data sets exported from the source database, however, said user is not granted an access right to the content of the data sets of the target database;
- as a response to the receipt of the import command, checking by the target access management system whether an owner right with respect to the target database is assigned to the user from whom the import command was received;
- only if the check reveals that the user from whom the import command was received is assigned an owner right with respect to the target database, importing and decrypting the encrypted data sets exported from the source database by the target access management system, wherein said user is not assigned access rights at least for some of the data sets to be imported.

12. The method according to one of the preceding claims, wherein the source access management system is a source DBMS, and wherein the target access management system is a target DBMS.

13. A computer system (946) having a source access management system (940), wherein the source access management system comprises:
- a source database (102, 104) with data sets (106, 108, 110, 112, 114, 116), wherein the data sets each contain at least one proof of access authorisation;
- a register, in which a plurality of first users (U1, U2, U3, U4, U11) are registered and stored,
- an interface (952) for receiving an export command to export data sets of the source database, wherein the export command is received from one of the first users,
- wherein the source access management system is configured such that it
∘ assigns to a plurality of the first users access rights to the content of the data sets (106, 108, 110, 112, 114, 116) in the form of one or more proofs of access authorisation,
∘ selectively enables access to the content of one of the data sets only for those of the first users to whom a proof of access authorization contained in said data set is assigned;
∘ assigns an owner right with respect to the source database to at least one of the first users, wherein the owner right allows a first user to export the source database in whole or in part, however, said first user is not granted an access right to the content of the data sets of the source database;
∘ as a response to the receipt of the export command, checks whether an owner right with respect to the source database is assigned to the first user from whom the export command was received;
∘ only if the check confirms that the user from whom the export command was received is assigned an owner right with respect to the source database, exporting all or selected data sets of the source database in encrypted form (960), wherein said user is not assigned access rights at least for some of the exported data sets of the source database.

14. A computer system (948) having a target access management system (942), wherein the target access management system comprises:
- a target database (944);
- a register, in which a plurality of second users (U1, U9, U23, U47) are registered and stored,
- an interface (958) for receiving an import command from one of the second users to import data sets,
wherein the target access management system is configured such that it
∘ assigns one or more of the second users access rights to the content of data sets in the form of one or more proofs of access authorisation,
∘ selectively enables access to the content of one of the data sets managed by the target access management system only for those of the second users to whom a proof of access authorization contained in said data set is assigned;
∘ assigns an owner right with respect to the target database to at least one of the second users, wherein the owner right allows a user to create new data sets in the target database by importing the data sets exported from the source database, however, said user is not granted an access right to the content of the data sets of the target database;
- as a response to the receipt of the import command, checking by the target access management system whether an owner right with respect to the target database is assigned to the second user from whom the import command was received;
- only if the check reveals that the second user from whom the import command was received is assigned an owner right with respect to the target database, importing and decrypting the encrypted data sets exported from the source database by the target access management system, wherein the imported data sets each contain at least one proof of access authorisation, wherein said second user is not assigned access rights at least for some of the data sets to be imported.

15. A distributed computer system (900) comprising a first computer system (946) according to claim 13 and a second computer system (948) according to claim 14, wherein the first and second computer system are connected via a network, and wherein the source access management system and the target access management system are designed to transmit the exported data via the network in encrypted form from the source access management system to the target access management system.

## Revendications

1. Procédé d'exportation d'ensembles de données (106, 108, 110, 112, 114, 116) à partir d'une banque de données source (102, 104), comprenant :
- la réception (920) d'une instruction d'exportation par un système de gestion d'accès source (940) pour l'export d'ensembles de données de la banque de données source (102), où plusieurs premiers utilisateurs (U1, U2, U3, U4, U11) sont enregistrés auprès du système de gestion d'accès source, où l'instruction d'exportation est reçue par un premier utilisateur, où le système de gestion d'accès source est conçu de telle manière qu'il
∘ accorde à plusieurs parmi les premiers utilisateurs des droits d'accès pour le contenu des ensembles de données (106, 108, 110, 112, 114, 116) sous la forme d'une ou de plusieurs attestations d'autorisation d'accès, où les ensembles de données stockés dans la banque de données source contiennent respectivement au moins une attestation d'autorisation d'accès,
∘ permette sélectivement un accès au contenu d'un des ensembles de données uniquement aux premiers utilisateurs en question auxquels est associée une attestation d'autorisation d'accès qui est contenue dans cet ensemble de données ;
∘ accorde à au moins un des premiers utilisateurs un droit propriétaire concernant la banque de données source, où le droit propriétaire permet à un premier utilisateur d'exporter la banque de données source totalement ou partiellement, mais n'aménage aucun droit d'accès au contenu des ensembles de données de la banque de données à ce premier utilisateur ;
- en réponse à la réception de l'instruction d'exportation, la vérification (922), par le système de gestion d'accès source, qu'un droit propriétaire concernant la banque de données source a été accordé au premier utilisateur par lequel l'instruction d'exportation a été reçue ;
- uniquement lorsque la vérification a pour résultat que le droit propriétaire concernant la banque de données source est accordé à l'utilisateur par lequel l'instruction d'exportation a été reçue, l'exportation (924) des ensembles de données de la banque de données source sous une forme chiffrée (960) par le système de gestion d'accès source, où aucun droit d'accès n'est accordé à cet utilisateur au moins pour quelques uns des ensembles de données exportés de la banque de données source.

2. Procédé d'exportation d'ensembles de données selon la revendication 1, dans lequel le système de gestion d'accès source garde en réserve à l'état stocké une clé cryptographique publique pour chacun des premiers utilisateurs, qui est associée au premier utilisateur respectif sous la forme d'un certificat utilisateur, où le certificat utilisateur est originaire d'un organisme de certification (140), où l'exportation des ensembles de données source sous forme chiffrée comprend :
- en réponse à la réception de l'instruction d'exportation, l'identification, par le système de gestion d'accès source, du certificat utilisateur de l'utilisateur par lequel l'instruction d'exportation a été reçue ;
- le chiffrement des ensembles de données à exporter avec la clé cryptographique publique du certificat utilisateur identifié.

3. Procédé d'exportation d'ensembles de données selon l'une des revendications,
- dans lequel le système de gestion d'accès source contient une première banque de données d'ID dans laquelle, à chacun des premiers utilisateurs, avec au moins un certificat utilisateur, une ou plusieurs attestations d'autorisation d'accès et éventuellement un ou plusieurs certificats propriétaires qui contiennent des droits propriétaires concernant une banque de données source gérée par le système de gestion d'accès source, sont stockés à l'état combiné, où un enregistrement combiné d'un certificat utilisateur et d'une attestation d'autorisation d'accès dans la première banque de données d'ID, permet au premier utilisateur, auquel est associé le certificat utilisateur, l'accès à des ensembles de données de la banque de données source, lesquels contiennent une copie de cette attestation d'autorisation d'accès.

4. Procédé de migration de données à partir d'une banque de données source (102) vers une banque de données cible (944), comprenant :
- l'exécution de l'exportation de données d'après un procédé d'exportation de données selon l'une des revendications précédentes ;
- la réception d'une instruction d'importation par un système de gestion d'accès cible (942) pour l'importation des ensembles de données exportés à partir de la banque de données source (102), où plusieurs deuxièmes utilisateurs (U1, U9, U23, U47) sont enregistrés auprès du système de gestion d'accès cible, où le système de gestion d'accès cible est conçu de telle manière qu'il
∘ accorde à un ou à plusieurs parmi les deuxièmes utilisateurs des droits d'accès pour le contenu d'ensembles de données sous la forme d'une ou de plusieurs attestations d'autorisation d'accès,
∘ permette sélectivement un accès au contenu d'un des ensemble de données gérés par le système de gestion d'accès cible uniquement aux deuxièmes utilisateurs en question auxquels est associée une attestation d'autorisation d'accès qui est contenue dans cet ensemble de données ;
∘ accorde à au moins un des deuxièmes utilisateurs un droit propriétaire concernant la banque de données cible, où le droit propriétaire permet à un utilisateur d'établir des nouveaux ensembles de données dans la banque de données cible par l'importation des ensembles de données exportés à partir de la banque de données source, mais n'aménage pas un droit d'accès à cet utilisateur au contenu des ensembles de données de la banque de données cible ;
- en réponse à la réception de l'instruction d'importation, la vérification, par le système de gestion d'accès cible, qu'un droit propriétaire concernant la banque de données cible a été accordé à l'utilisateur par lequel l'instruction d'importation a été reçue ;
- uniquement lorsque la vérification a pour résultat que le droit propriétaire concernant la banque de données cible est accordé à l'utilisateur par lequel l'instruction d'importation a été reçue, l'importation et le déchiffrement des ensembles de données exportés de la banque de données source chiffrés par le système de gestion d'accès cible, où aucun droit d'accès n'est accordé à cet utilisateur au moins pour quelques uns des ensembles de données à importer.

5. Procédé de migration de données selon la revendication 4, dans lequel le système de gestion d'accès cible conserve une clé privée enregistrée à l'état protégé qui, conjointement avec la clé publique du premier utilisateur, qui est à l'origine de l'instruction d'exportation, forme une paire de clés cryptographiques asymétrique, où la mémoire sécurisé contient la clé privée, de sorte que la clé privée peut être exclusivement employée pour le déchiffrement des ensembles de données exportés de la banque de données source par le biais d'une interface mise à disposition par le système de gestion d'accès cible.

6. Procédé de migration de données selon la revendication 4 ou la revendication 5, dans lequel le système de gestion d'accès cible, pour chacun des deuxièmes utilisateurs, conserve stocké à l'état protégé une clé privée, où la clé privée, avec une clé publique, qui est associée au deuxième utilisateur respectif sous la forme d'un certificat utilisateur, forme une paire de clés cryptographiques asymétrique, où le certificat utilisateur a pour origine un organisme de certification (140), où le déchiffrement des ensembles de données importés comprend :
- en réponse à la réception de l'instruction d'importation, l'identification, par le système de gestion d'accès cible, de la clé cryptographique privée qui est associée à l'utilisateur par lequel l'instruction d'importation a été reçue ;
- le déchiffrement des ensembles de données à importer avec la clé privée identifiée.

7. Procédé de migration de données selon l'une des revendications 4 à 6,
- dans lequel le système de gestion d'accès cible contient une deuxième banque de données d'ID (966) dans laquelle, à chacun des deuxièmes utilisateurs, avec au moins un certificat utilisateur, une ou plusieurs attestations d'autorisation d'accès et éventuellement un ou plusieurs certificats propriétaires, qui contiennent des droits propriétaires concernant une banque de données cible gérée par le système de gestion d'accès cible, sont stockés à l'état combiné, où un enregistrement combiné d'un certificat utilisateur et d'une attestation d'autorisation d'accès dans la deuxième banque de données d'ID, permet au deuxième utilisateur, auquel est associé le certificat utilisateur, l'accès à des ensembles de données de la banque de données cible, lesquels contiennent une copie de cette attestation d'autorisation d'accès ; et
- dans lequel le même certificat utilisateur établi par l'organisme de certification est accordé à au moins un des premiers utilisateurs et un des deuxièmes utilisateurs.

8. Procédé de migration de données selon l'une des revendications 4 à 7, dans lequel le système de gestion d'accès cible garde en réserve à l'état stocké une clé cryptographique privée pour chacun des deuxièmes utilisateurs, qui est associée au deuxième utilisateur respectif, où l'importation des ensembles de données dans la banque de données cible comprend :
- en réponse à la réception de l'instruction d'importation, l'identification, par le système de gestion d'accès cible, de la clé cryptographique privée de celui des deuxièmes utilisateurs qui est à l'origine de l'instruction d'importation ;
- le déchiffrement des ensembles de données à importer avec la clé cryptographique privée identifiée.

9. Procédé de migration de données selon l'une des revendications 4 à 8, comprenant en outre :
- la réception d'une première demande d'accès par le système de gestion d'accès source par le premier utilisateur, où la demande d'accès concerne un ensemble de données qui a été établi dans la banque de données source par un autre premier utilisateur, où cet ensemble de données contient une attestation d'autorisation d'accès de l'autre premier utilisateur ;
- la vérification, par le système de gestion d'accès source si, associée à un premier utilisateur, qui est à l'origine de la première demande d'accès, une copie de cette attestation d'autorisation d'accès est stockée combinée avec le certificat utilisateur du premier utilisateur qui est à l'origine de la demande d'accès, dans une première banque de données d'ID qui est gérée par le système de gestion d'accès source ;
- l'octroi de l'accès à l'ensemble de données de l'autre premier utilisateur, au premier utilisateur qui est à l'origine de la première demande d'accès, uniquement si le système de gestion d'accès source constate que la copie est stockée combinée avec le certificat utilisateur, où l'accès n'est octroyé que dans le cadre de la manière d'accès spécifiée dans l'attestation d'autorisation d'accès.

10. Procédé selon l'une des revendications 4 à 9, comprenant en outre :
- après l'importation des ensembles de données exportés dans la banque de données cible, la réception d'une deuxième demande d'accès par le système de gestion d'accès cible par un des deuxièmes utilisateurs, où la deuxième demande d'accès concerne un des ensembles de données importé qui a été établi dans la banque de données source par un premier utilisateur, qui représente une personne qui est enregistrée en tant qu'autre deuxième utilisateur auprès du système de gestion d'accès cible, où cet ensemble de données contient au moins une attestation d'autorisation d'accès de l'autre deuxième utilisateur ;
- la vérification, par le système de gestion d'accès cible si, associée à ce deuxième utilisateur, qui est à l'origine de la deuxième demande d'accès, une copie de cette attestation d'autorisation d'accès est stockée combinée avec le certificat utilisateur du deuxième utilisateur qui est à l'origine de la deuxième demande d'accès, dans une deuxième banque de données d'ID qui est gérée par le système de gestion d'accès cible ;
- l'octroi de l'accès à l'ensemble de données de l'autre deuxième utilisateur au deuxième utilisateur qui est à l'origine de la deuxième demande d'accès, uniquement si le système de gestion d'accès cible constate que la copie est stockée combinée avec le certificat utilisateur, où l'accès n'est octroyé que dans le cadre de la manière d'accès spécifiée dans l'attestation d'autorisation d'accès.

11. Procédé d'importation d'ensembles de données dans une banque de données cible, comprenant :
- la réception d'une instruction d'importation par un système de gestion d'accès cible (942) pour l'importation des ensembles de données, où plusieurs deuxièmes utilisateurs (U1, U9, U23, U47) sont enregistrés auprès du système de gestion d'accès cible, où le système de gestion d'accès cible est conçu de telle manière qu'il
∘ accorde à un ou à plusieurs parmi les deuxièmes utilisateurs des droits d'accès pour le contenu d'ensembles de données sous la forme d'une ou de plusieurs attestations d'autorisation d'accès, où les ensembles de données à importer contiennent respectivement au moins une attestation d'autorisation d'accès ;
∘ permette sélectivement un accès au contenu d'un des ensembles de données gérés par le système de gestion d'accès cible uniquement aux deuxièmes utilisateurs en question auxquels est associée une attestation d'autorisation d'accès qui est contenue dans cet ensemble de données ;
∘ accorde à au moins un des deuxièmes utilisateurs un droit propriétaire concernant la banque de données cible, où le droit propriétaire permet à un utilisateur d'établir des nouveaux ensembles de données dans la banque de données cible par l'importation des ensembles de données exportés à partir de la banque de données source, mais n'aménage pourtant pas un droit d'accès au contenu des ensembles de données de la banque de données cible à cet utilisateur ;
- en réponse à la réception de l'instruction d'importation, la vérification, par le système de gestion d'accès cible, qu'un droit propriétaire concernant la banque de données cible a été accordé à l'utilisateur par lequel l'instruction d'importation a été reçue ;
- uniquement lorsque la vérification a pour résultat que le droit propriétaire concernant la banque de données cible est accordé à l'utilisateur par lequel l'instruction d'importation a été reçue, l'importation et le déchiffrement des ensembles de données exportés de la banque de données source par le système de gestion d'accès cible, où aucun droit d'accès n'est accordé à cet utilisateur au moins pour quelques uns des ensembles de données à importer.

12. Procédé selon l'une des revendications précédentes, dans lequel le système de gestion d'accès source est un système de gestion de base de données DBMS source et dans lequel le système de gestion d'accès cible est un DBMS cible.

13. Système informatique (946) doté d'un système de gestion d'accès source (940), dans lequel le système de gestion d'accès source comprend :
- une banque de données source (102, 104) avec des ensembles de données (106, 108, 110, 112, 114, 116), où les ensembles de données contiennent respectivement au moins une attestation d'autorisation d'accès ;
- un registre dans lequel plusieurs premiers utilisateurs (U1, U2, U3, U4, U11) sont enregistrés et stockés,
- une interface (952) pour recevoir une instruction d'exportation pour l'exportation d'ensembles de données de la banque de données source, où l'instruction d'exportation est reçue par un premier utilisateur,
- dans lequel le système de gestion d'accès cible est conçu de manière à ce qu'il
∘ accorde à plusieurs parmi les premiers utilisateurs des droits d'accès pour le contenu des ensembles de données (106, 108, 110, 112, 114, 116) sous la forme d'une ou de plusieurs attestations d'autorisation d'accès,
∘ permette sélectivement un accès au contenu d'un des ensembles de données uniquement aux premiers utilisateurs en question auxquels est associée une attestation d'autorisation d'accès qui est contenue dans cet ensemble de données ;
∘ accorde à au moins un des premiers utilisateurs un droit propriétaire concernant la banque de données source, où le droit propriétaire permet à un premier utilisateur d'exporter la banque de données source totalement ou partiellement, pourtant n'aménage aucun droit d'accès au contenu des ensembles de données de la banque de données à ce premier utilisateur ;
∘ en réponse à la réception de l'instruction d'exportation, vérifie qu'un droit propriétaire concernant la banque de données source a été accordé au premier utilisateur, par lequel l'instruction d'exportation a été reçue ;
∘ uniquement lorsque la vérification a pour résultat que le droit propriétaire concernant la banque de données source est accordé à l'utilisateur par lequel l'instruction d'exportation a été reçue, exporte tous les ensembles de données ou des ensembles sélectionnés de la banque de données source sous une forme chiffrée (960), où aucun droit d'accès n'est accordé à cet utilisateur au moins pour quelques uns des ensembles de données exportés de la banque de données source.

14. Système informatique (948) doté d'un système de gestion d'accès cible (942), dans lequel le système de gestion d'accès cible comprend :
- une banque de données cible (944) ;
- un registre dans lequel plusieurs deuxièmes utilisateurs (U1, U9, U23, U47) sont enregistrés et stockés,
- une interface (958) pour recevoir une instruction d'importation pour l'importation d'ensembles de données à partir d'un des deuxièmes utilisateurs,
- dans lequel le système de gestion d'accès cible est conçu de manière à ce qu'il
∘ accorde à un ou plusieurs parmi les deuxièmes utilisateurs des droits d'accès pour le contenu des ensembles de données sous la forme d'une ou de plusieurs attestations d'autorisation d'accès,
∘ permette sélectivement un accès au contenu d'un des ensembles de données gérés par le système de gestion d'accès cible uniquement aux deuxièmes utilisateurs en question auxquels est associée une attestation d'autorisation d'accès qui est contenue dans cet ensemble de données ;
∘ accorde à au moins un des deuxièmes utilisateurs un droit propriétaire concernant la banque de données cible, où le droit propriétaire permet à un utilisateur d'établir des nouveaux ensembles de données dans la banque de données cible par l'importation des ensembles de données exportés à partir de la banque de données source, mais n'aménage aucun droit d'accès au contenu des ensembles de données de la banque de données cible à cet utilisateur ;
- en réponse à la réception de l'instruction d'importation, la vérification, par le système de gestion d'accès cible, qu'un droit propriétaire concernant la banque de données cible a été accordé au deuxième utilisateur par lequel l'instruction d'exportation a été reçue ;
- uniquement lorsque la vérification a pour résultat que le droit propriétaire concernant la banque de données cible est accordé au deuxième utilisateur par lequel l'instruction d'importation a été reçue, l'importation et le déchiffrement des ensembles de données chiffrés et exportés à partir de la banque de données source par le système de gestion d'accès cible, où les ensembles de données importés contiennent respectivement au moins une attestation d'autorisation d'accès, où aucun droit d'accès n'est accordé à ce deuxième utilisateur au moins pour quelques uns des ensembles de données à importer.

15. Système informatique partagé (900) avec un premier système informatique (946) selon la revendication 13 et un deuxième système informatique (948) selon la revendication 14, dans lequel les premier et deuxième systèmes informatiques sont reliés par le biais d'un réseau et dans lequel le système de gestion d'accès source et le système d'accès cible sont conçus pour transmettre les données exportées sous forme chiffrée du système de gestion d'accès source au système de gestion d'accès cible par le biais du réseau.
